# EUROPEAN PATENT SPECIFICATION

(11) **EP 3 408 016 B1**
(45) Date of publication and mention of the grant of the patent: **22.11.2023**
(21) Application number: 17706601.6
(22) Date of filing: 26.01.2017
(51) Int. Cl.: C09K 23/16

(54) **POLYMERIC DISPERSANTS CONTAINING MULTI-AMINE GROUPS WITH IMPROVED CHEMICAL AND THERMAL STABILITY**
POLYMERE DISPERGIERMITTEL MIT MULTI-AMIN-GRUPPEN MIT VERBESSERTER CHEMISCHER UND THERMISCHER STABILITÄT
DISPERSANTS POLYMÈRES CONTENANT DES GROUPES D'AMINES MULTIPLES AVEC STABILITÉ CHIMIQUE ET THERMIQUE AMÉLIORÉE

(30) Priority: 29.01.2016 US 201662288918 P
(43) Date of publication of application: 05.12.2018
(73) Proprietor: Lubrizol Advanced Materials, Inc., Cleveland, OH 44141-3247 (US)
(72) Inventor: SHOOTER, Andrew J., Manchester Greater Manchester M9 8ZS (GB); THETFORD, Dean, Manchester Greater Manchester M9 8ZS (GB); RICHARDS, Stuart N., Manchester Greater Manchester M9 8ZS (GB); JENNINGS, Robert A., Manchester Greater Manchester M9 8ZS (GB)
(74) Representative: dompatent von Kreisler Selting Werner - Partnerschaft von Patent- und Rechtsanwälten mbB
(86) International application number: PCT/US2017/015135
(87) International publication number: WO 2017/132380

(56) References cited:
- WO-A1-00/12582
- JP-A- 2004 339 368
- US-A1- 2010 152 339
- US-A1- 2015 072 910

## Description

### FIELD OF INVENTION

The present invention relates to polymeric dispersants having multiple tertiary amine groups or quaternized tertiary amine groups for particulate anchoring purposes, wherein each amine group is chemically bonded to the dispersant by an alkylene group having a geminal dialkyl-substituted carbon in the beta carbon of the alkyl group relative to the nitrogen.

### BACKGROUND OF THE INVENTION

Dispersants for pigments and other particulates are known. Dispersants generally have an anchoring portion of the molecule that has some attraction for and anchors to the pigment or particulate surfaces and a solubilizing portion that interacts favorably with the continuous phase. When the solubilizing portion is anchored to the pigment or particulate, the solubilizing portion acts as a barrier to aggregation of the particulate.

There are many patents which disclose dispersants that contain a tertiary amine, an alkyl ammonium or a quaternary ammonium functionality, which are useful for anchoring the dispersant to various particulate solids such as pigments and fillers. In order to disperse pigments uniformly in a non-aqueous medium specially designed dispersing agents are required to produce dispersions having acceptable viscosity and stability properties, which when incorporated into printing inks, coatings or paints give the inks, coatings and paints with acceptable flow characteristics.
US 2010/152339 A1 relates to a graft copolymer with a polyester side chain and at least one quaternised tertiary amine group. The tertiary amine may be aliphatic, aromatic or heterocyclic. The invention further relates to the use of the compound as a dispersant, particularly for pigments
US 2015/072910 A1 relates to a quaternary ammonium salt detergent made from the reaction product of the reaction of: (a) polyalkene-substituted amine having at least one tertiary amino group; and (b) a quaternizing agent suitable for converting the tertiary amino group to a quaternary nitrogen and the use of such quaternary ammonium salt detergents in a fuel composition to reduce intake valve deposits.
WO 00/12582 A relates to a polymeric pigment dispersant of a graft polymer having an acrylic polymer backbone and pending from the backbone, polyester side chains, cyclic imide groups and quaternary ammonium groups and the polymer having a calculated number average molecular weight of 8,000-50,000; wherein the graft copolymer is composed of: (a)10-50 %, by weight of the graft polymer, of an acrylic copolymer backbone having a number average molecular weight of 2,500-10,000 which, before reaction, contains 25-75 % by weight of polymerized oxirane containing monomers; (b) 20-85 %, by weight of the graft polymer, of a polyester copolymer, or mixture of different polyester copolymers, having a number average molecular weight of 500-10,000 which polyester copolymer is carboxylic acid functional and is attached to the backbone by a reaction of the carboxylic acid functional group with oxirane group of the backbone; (c) 1-16 %, by weight of the graft polymer, of cyclic imide groups attached to the backbone by a reaction of the imide group with the oxirane group of the backbone and (d) 0.2-17 %, by weight of the graft polymer, of quaternary ammonium groups.
JP 2004 339 368 A relates to a pigment dispersion for a curable coloring composition comprising at least a pigment, the pigment dispersant comprising a copolymer which has a molecular structure comprising a constituting unit bearing a specific quaternary ammonium salt group and, linked thereto, a constituting unit having a specific ester structure at least in its side chain and bears neither a polyether chain nor an acidic functional group, a copolymer which has a molecular structure comprising at least a constituting unit having an SP (solubility parameter) value of at least 10 and bearing no acidic functional group and, linked thereto, a constituting unit bearing an epoxy group, and an organic solvent.

### SUMMARY OF THE INVENTION

Tertiary amine/quaternary amine containing dispersants are disclosed wherein the tertiary amine/quaternary amine group is chemically bonded to the dispersant by an alkylene group having a geminal dialkyl-substituted carbon in the beta (β) carbon of the alkylene group relative to the nitrogen. These dispersants have better thermal stability than similar dispersants without the geminal dialkyl-substituted carbon in the beta (β) carbon of the alkylene group. The improved thermal stability is illustrated by a) the reduced tendency of formulations with the dispersant to yellow upon exposure to heat and b) the performance of the dispersant and dispersions after aging (lower particle sizes, increased gloss of coatings, and reduced haze in coatings).

A drawback arising from tertiary amine/quaternary amine containing dispersants is the tendency of the dispersants to discolour. The generation of colour (e.g. yellow or brown) is exacerbated by exposure to high temperatures which can be disadvantageous for use in applications where compositions containing the dispersant are exposed to elevated temperatures either during a manufacturing process or in end use (e.g. colour filters, toners, coil coatings). We have found that dispersants comprising tertiary or quaternary amine groups, wherein the tertiary or quaternary amine groups are chemically bonded to the dispersant, by an alkylene group having a geminal dialkyl-substituted carbon in the beta carbon of the alkylene group relative to the nitrogen are effective dispersants and overcome this problem by having significantly improved colour stability under high temperature conditions. Exposure to high temperature can also lead to release of an amine containing residue from the dispersant due to Hofmann degradation of the quaternary ammonium salts. It is well known that amines when quaternised either as salts or quaternary ammonium groups are excellent leaving groups because of the electronegativity of the ammonium group and the electron inductive effect to form the free amine functionality. This potential as a leaving group is exacerbated if one of the alkyl groups attached to the ammonium functionality has β-hydrogens present, these hydrogens have a tendency to eliminate and form double bonds on the alkyl group and thus eliminate the ammonium functionality from the rest of the molecule. This is commonly called the Hofmann Elimination or Degradation and usually occurs at elevated temperatures. Thus, compounds containing quaternary ammonium groups where β-hydrogens are present can have problems with thermal stability.

The answer to circumvent such problems with the loss of tertiary or quaternized amine groups is to design amines and their quaternary ammonium functionalities to have no β-hydrogens present.
The present invention is directed towards polymeric dispersants and compositions comprising said polymeric dispersants as defined in the appended claims.

### DETAILED DESCRIPTION OF THE INVENTION

Various preferred features and embodiments will be described below by way of non-limiting illustration.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade. The use of (meth) in a monomer or repeat unit indicates an optional methyl group, such as methyl (meth)acrylate.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

The technology disclosed below provides a polymeric dispersant having a tertiary aliphatic amine (optionally quaternized) without β-hydrogens in the linking group as an anchoring group of a dispersant for particulates, such as a pigment or filler. The amine containing polymeric agents are good dispersants for particulates such as pigments, fillers, and reinforcing elements for use in inks, plastics and paints. The dispersants are able to reduce viscosity in millbases in order that pigment loadings can be increased thus improving production. They also enhance final film properties such as higher gloss, reduced haze, reduced flocculation, and improved colour strength. In particular, these type of amine containing polymers with no β-hydrogens present do not yellow easily at elevated temperatures compared to other amine containing polymers.

The amount of dispersant will depend on the amount of particulate material dispersed and the surface area/gram of the particulate material. As the particle size decreases the surface area increases and there is a requirement for more dispersant per gram as the surface area increases. Generally > 1.0% by wt. dispersant of formula 1 or desirably > 5% or preferably > 10% based on the particulate solid is effective. In one embodiment desirably the amount dispersant is < 130, more desirably < 100% by wt., more desirably < 50%, and preferably < 30 % by wt. based on the weight of the particulate solid.

These amine containing polymeric dispersants are stable at ambient and do not cause formation of toxic degradation products. They are also stable at elevated temperatures, and do not release amine type degradation products causing odours and loss of dispersion stability and performance. The latter is particularly advantageous when they are used in high tech applications where elevated temperatures are used in processing steps and daily use, e.g. in ink jet inks, phase change inks, plastics, toners, coil coatings, automotive paints, and colour filter.

These polymeric dispersants will desirably have solvent-solubilizing groups that interact favorably with the medium in which the particulate is dispersed. The dispersant will colloidally stabilize the particulate as a dispersed phase in a medium. The medium can be water, polar organic medium, non-polar organic medium or compatible/homogenous blends of any of the prior components under the conditions of use. The medium will dictate the solvent-solubilizing chains used in the dispersant as some solvent-solubilizing chains (e.g. polyethers) interact favorably with very polar medium such as water, other solvent-solubilizing chains (polyacrylates and polyolefins) interact favorably with non-polar medium. The medium can also be polymeric or a thermoplastic, such as a plastic, rubber or thermoplastic. Preferred final compositions are inks, millbases, coatings, pigmented and/or filled plastics.

The dispersants can be random copolymers of the particulate anchoring repeat units with solvent solubilizing repeat units or the dispersants can be block copolymers having at least two blocks. The dispersants can have a block structure where the solvent-solubilizing chains are terminal and can have block structure where some of the solvent-solubilizing chains are essentially linear chains between two anchoring polymer backbone segments. In one preferred version of the dispersant uses solvent solubilizing chains derived from ethylenically unsaturated macromonomers having attached solvent-solubilizing chains. In one embodiment, when said macromonomers are co-polymerized with the various acrylic and styrene type monomers, the solvent-solubilizing chains are attached at one point on the solubilizing chain to the dispersant backbone, but the other end of the solvent-solubilizing chain has freedom to extend into the continuous medium. Such attachment is called laterally attached or pendantly attached to the polymer backbone. Dispersants with laterally attached pendant solubilizing chains are often referred to as comb polymers as the extended solubilizing chains can be represented by comb-like teeth in the image. In many embodiments the polymer has an essentially linear backbone except for the pendantly attached tertiary amine groups and potential laterally attached solubilizing chains. In other embodiments monomers with two or more ethylenically unsaturated groups (such as divinyl benzene, glycol diacrylates, glycol triacrylates, glycol tetraacrylates) are copolymerized into the dispersant such that branched polymer backbones are created as part of the dispersant synthesis.

The dialkylamino gem disubstituted alkylene group may be incorporated by 1) co-polymerizing an unsaturated group in a monomer such as dimethylaminoneopentyl(meth)acrylate into a polymer or 2) reacting N,N dimethylamino neopentane diamine with a functional acrylic monomer before or after polymerization of an acrylic type polymer. Other dialkylamino gem disubstituted alkylene groups that may be present are described later in the specification.

The acrylic polymers useful as dispersants can be classified as random, block or comb type. However it may be difficult to distinguish between these polymers as there will be some products where the side chains of the comb and/or anchor groups come in a block(s), such as where there is a block of polymer with solubilizing side chains and then a block of polymer with anchor groups thereon.

According to the present invention there is provided a composition comprising a particulate solid, an organic or aqueous medium and a compound of formula (1)

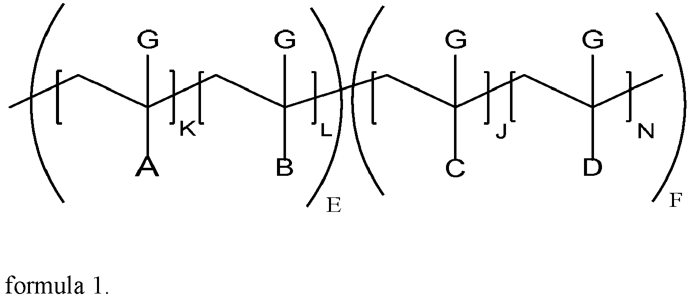

Where G is a CH₃ or H group.

A is a moiety comprising a tertiary or quaternized aliphatic amine and a connecting group comprising a hydrocarbylene, wherein hydrocarbylene refers to a divalent hydrocarbon type group such as formed with the removal of two hydrogens from a hydrocarbon group of 5 to 30 carbon atoms and optionally comprising up to 3, 4, or 5 oxygen atoms, up to 1 or 2 sulfur atoms, and/or up to 3, 4, or 5 nitrogen atoms in ether, ester, sulfur, and amide type linkages, represented by but not limited to formulas 2-9 below where the portion of formula 1 having the subscript where 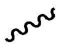 indicates the carbon-carbon bond to the carbon backbone of formula 1. In one embodiment, desirably the number total oxygen, nitrogen, and sulfur atoms is less than 1 per every 5 carbon atoms in the hydrocarbylene group. In one embodiment desirably the heteroatoms (atoms other than carbon or hydrogen) are limited to oxygen or oxygen and nitrogen. The 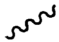 is not considered to be part of formulas 2-24 but rather indicates where the formulas connect to the backbone of formula 1. The hydrocarbylene linking group of A contains a gem disubstituted alkylene radical of 5 carbons or more 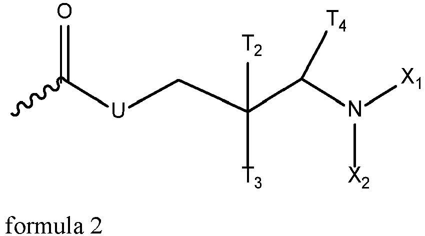 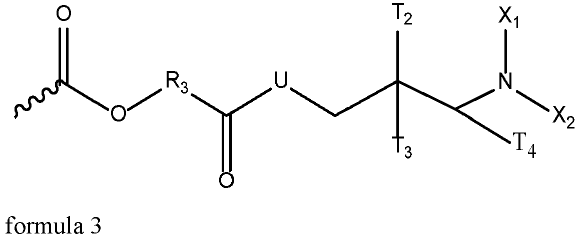 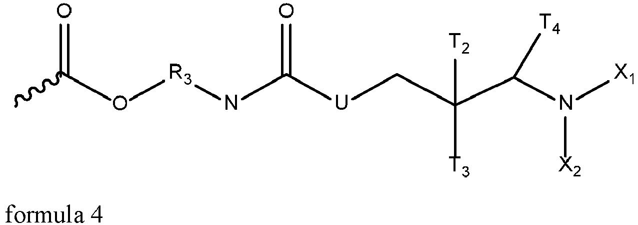 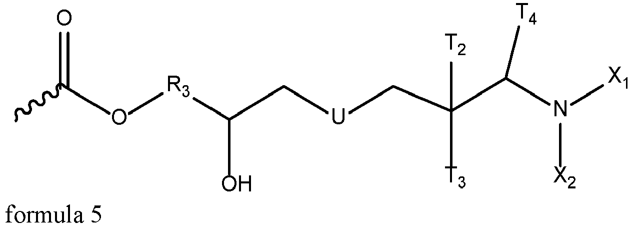 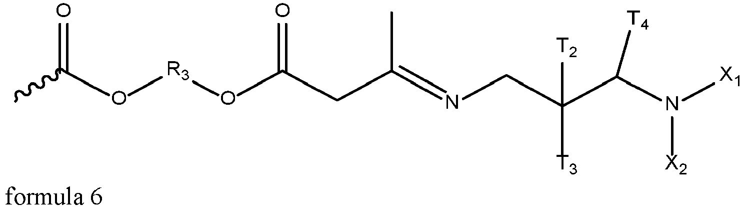 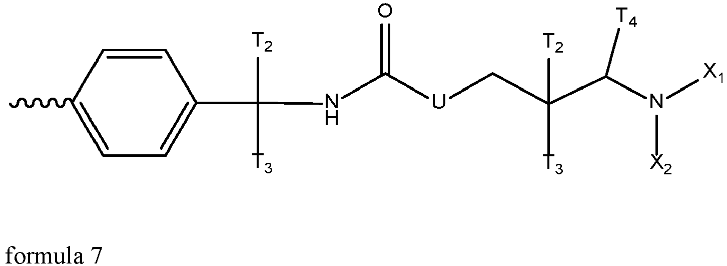 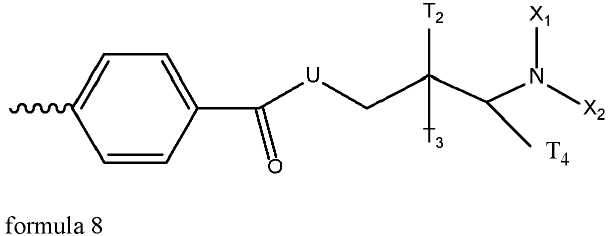 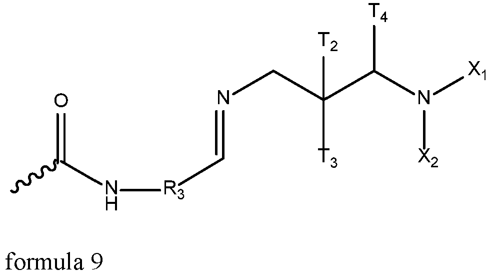
U is a functional nitrogen, oxygen or sulfur, typically oxygen or nitrogen and in the case of nitrogen can contain a pendant group such as H, C₁₋₆ alkyl, or C₂₋₆ acyl group,
R₃ is independently an alkylene or a hydrocarbylene group that may be linear or branched having a carbon number of 1-25, when R₃ is a hydrocarbylene group it may contain oxygen or nitrogen atoms in an amount of up to one nitrogen or oxygen for every 3 carbon atoms.

T₂ and T₃ are each independently alkyl such as Me, Et, Pr, hydroxy C₁-C₃-alkylene such as - CH₂OH, aryl such as benzyl or phenyl, or the group -CH(T₄) -N(X₁) (X₂); T₄ is H, or optionally substituted aryl such as benzyl, phenyl or cinnamyl where the substituent is C₁-C₄-alkoxy, hydroxyl, C₁-C₄-alkyl, optionally halogen, optionally C₁-C₄-alkyl substituted with heteroatoms. A cinnamyl group would be PhC(H)=CH- and the Ph (phenyl) group could be substituted as specified above.

X₁ and X₂ are each independently alkyl, substituted alkyl, aralkyl or alkaryl groups; alkyl groups are preferred especially methyl groups; or X₁, X₂, and the nitrogen atom together can form a substituted or non-substituted ring structure of five or six atoms, optionally having aromaticity, such as where X₁, X₂, and the nitrogen atom form pyridine, morpholine, or imidazole,
The nitrogen atom X₁-N-X₂ may be partly or fully quaternised; quaternising agents include dimethyl sulfate; diethyl sulfate; benzyl chloride; dimethyl oxalate; C₂₋₅₀ hydrocarbyl epoxide, such as ethylene oxide, propylene oxide, butylene oxide, styrene oxide, phenyl glycidyl ether, etc. in combination with an acid such as acetic acid; 1,3-propane sultone; 1,4-butane sultone; and 2-chloroacetic acid. The tertiary amine functionality may be partially or fully neutralised using acids to form salts of the tertiary amine functionality. Suitable acids can be C₁₋₂₀ organic acids or inorganic acids, such as hydrochloric acid; sulphuric acid; and aromatic or aliphatic sulphonic, phosphonic, or carboxylic acids; such as methanesulphonic acid, acetic acid, formic acid, p-toluenesulphonic acid, and benzoic acid.

B is the remainder of acrylic monomer or mixtures of monomers after incorporating the two carbons and any G group of the carbon-to-carbon double bond of the acrylic type monomer into the backbone, i.e. it is the COOH of acrylic acid, the COO-alkyl of alkyl acrylates, etc., B is in the particulate anchoring portion of the dispersant and therefore desirably part of an acrylic type monomer that would function to anchor the dispersant to a particulate, such as a pigment. B can also be aromatic, it could also be derived from an acrylamide monomer for example dimethacrylamide or it could be a neutralised acid.

C is a moiety derived from an acrylic monomer or mixtures of monomer(s) such as (meth)acrylic acids, salts of (meth)acrylic acids, amides of (meth)acrylic acids; alkyl (meth) acrylates; acids, salts, and amides of ethylenically unsaturated diacids such as itaconic acid, maleic acid, etc. specifically in one embodiment the remainder of the (meth)acrylic acid, salts of (meth)acrylic acid, (meth)acrylates, (meth)acrylamides in proper portion to adjust the solubility of the polymer derived from the C containing monomer to the desired continuous media (e.g. organic continuous media or water rich continuous media) after the carbon-to carbon bond is incorporated into the backbone of the structure of formula 1. Alkyl (meth)acrylates would be good for organic continuous media and mixtures of (meth)acrylates, (meth)acrylamides or salts of (meth)acrylic acid would be good for water rich continuous media.

D comprises a polymeric segment of 300 to 5000 g/mole molecular weight characterized as a solvent solubilizing polymeric segment wherein said polymeric segment is selected from a polyacrylate, polyester, polyether, or copolymer of polyether and polyester. D in one embodiment is the remainder of the molecule after the carbon-to-carbon double bond is incorporated into the backbone of formula 1.

the two types of repeat units (those with A and B thereon) within the parenthesis) and the variable E indicating the number of those repeat units is the anchoring segment(s) of the copolymer and is present from 10-60 wt. % especially preferred is 30-50 wt. % of the dispersant.

the two types of repeat units (those with C and D thereon) and the variable F indicating the number of those repeat units is the stabilizing segment(s) of the copolymer and is present from 40-90 wt. % especially preferred is 50-70% of the dispersant,

A and B may be randomly or block copolymerized in segment E; C and D may be randomly or block copolymerized in segment F, repeat units of A and B may be in a blocky or random configuration with repeat units of C and D, such as a block of A and B, then a block of C and D, then another block of A and B, etc.

In a block or comb copolymer moiety B is not the same as C and L may be equal to J.

In a gradient copolymer moiety B is the same as C but L is not equal to J.

The copolymer may be segmented such that the tertiary amine functionality A is distributed at the ends of the polymer chain (E-F-E) block copolymer or in the middle of the polymer chain (F-E-F) block copolymer.

Wherein K, E, and F are at least 1; L, J, and N can individually be zero but J and N cannot both be zero in the same dispersant of formula 1;

The sum of K + L + J + N are non-negative integers such that the polymer has **a molecular weight of 2000 or greater,** preferably greater than 2000, especially greater than 3000.

Also the sum of K + L + J + N are such that the molecular weight is **60,000 or less,** preferably less than 60000, especially less than 40000 g/mole.

### Embodiment 1 (Block copolymer)

A block copolymer would comprise of the tertiary amine monomer in block E and one or more acrylic monomers in block F
E=1 and F=1 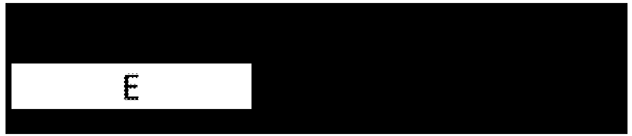
**K is not equal to 0**
L is optionally equal to 0
**J is not equal to 0**
N is equal to 0

### Embodiment 2 (Block copolymer with macromonomer)

A block copolymer comprises of a tertiary amine monomer and at least one macromonomer. A macromonomer is defined as a monomer having a polymer chain from molecular weight 300-10,000 comprising polyether, polyester, polyacrylate, polyolefin.
E=1 and F=1 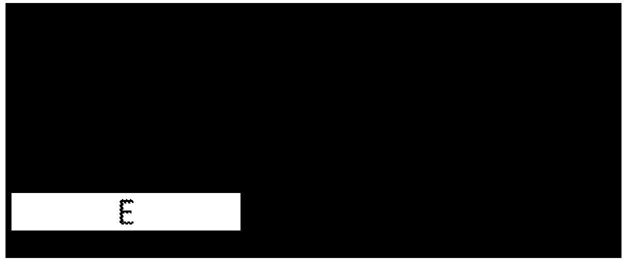
**K is not equal to 0**
L is optionally equal to 0
J is optionally equal to 0
**N is not equal to 0**

### Embodiment 3 (Random copolymer)

E>1 and F>1, E and F are randomly distributed throughout the polymer chain 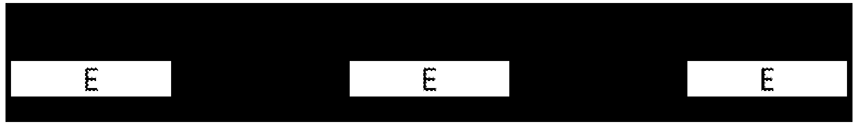
**K is not equal to 0**
L is optionally equal to 0
**J is not equal to 0**
N is equal to 0

### Embodiment 4 (Random copolymer with macromonomer)

A random copolymer with macromonomer would comprise of a tertiary amine monomer and one or more macromonomers.
E>1 and F>1, E and F are randomly distributed throughout the polymer chain 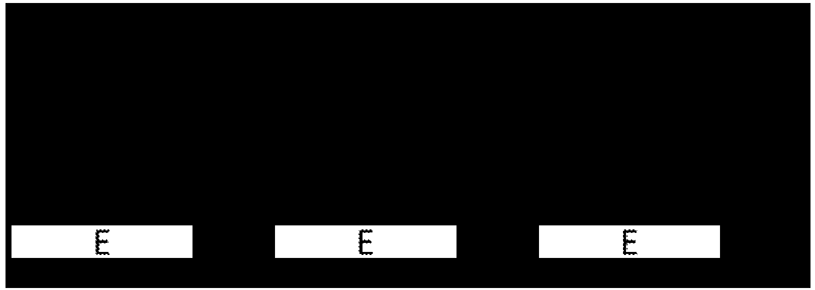
**K is not equal to 0**
L is optionally equal to 0
J is optionally equal to 0
**N is not equal to 0**

**B and C are moieties that may comprise an alkyl or aromatic group as detailed in** formulas 10-12. The variable 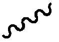 indicates the carbon-carbon bond to the carbon backbone of formula 1. The 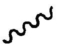 is not considered to be part of formulas 10-12, but rather indicates where the formulas connect to the backbone of formula 1.

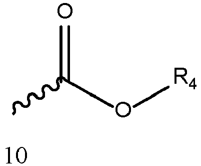

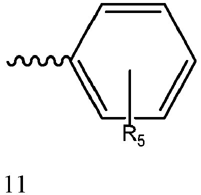

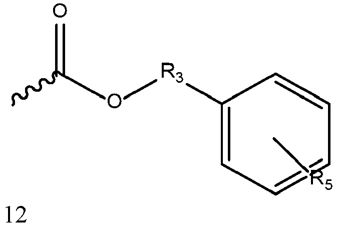

R₄ is a linear or branched alkyl **group having a carbon number of 1-25, R₅ is H,** -CH₃ or linear or branched alkyl groups having carbon number of 1-25 (typically linear).

Typical alkyl methacrylates and alkyl acrylates that can be used as a copolymerizable ethylenically unsaturated monomer, where (meth) means a methyl group is optionally present, include methyl (meth)acrylate, ethyl (meth)acrylate, propyl (meth)acrylate, isopropyl (meth)acrylate, butyl (meth)acrylate, isobutyl (meth)acrylate, hexyl (meth)acrylate, 2-ethylhexyl (meth)acrylate, nonyl (meth)acrylate, lauryl (meth)acrylate, stearyl (meth)acrylate, cyclohexyl (meth)acrylate, isodecyl (meth)acrylate, isobornyl (meth)acrylate. Typical aromatic monomers are benzyl (meth)acrylate, styrene, 3-methyl styrene, 4-methyl styrene, 4-tert-butyl styrene, 4-tert-butoxy styrene,

B or C may be a functional acrylate or styrene as detailed in formula 13-16. The symbol 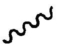 indicates the carbon-carbon bond to the carbon backbone of formula 1. The 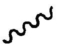 is not considered to be part of formulas 13-16 but rather indicates where the formulas connect to the backbone of formula 1.

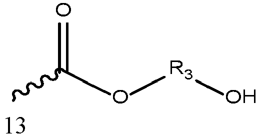

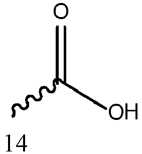

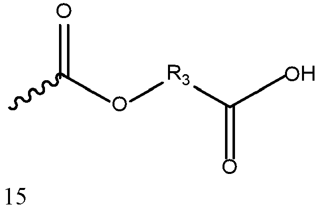

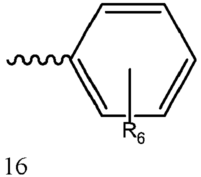

R₆ is H, -O-C(=O)-CH₃, COOH, Br, Cl, F, NO_{2.}

Examples are 2-hydroxyethyl (meth)acrylate, 2-hydroxypropyl (meth)acrylate, 2-hydroxybutyl(meth) acrylate, (meth)acrylic acid, beta-carboxyethyl (meth)acrylate, 3-vinylbenzoic acid, 4-vinylbenzoic acid, 4-acetoxy styrene, 4-vinyl benzyl chloride, 2-bromostyrene, 3-bromostyrene, 4-bromostyrene, 2-chlorostyrene, 3-chlorostyrene, 4-chlorostyrene, 4-chloro-alpha-methylstyrene, 2,6-dichlorostyrene, 2-fluorostyrene, 3-fluorostyrene, 4-fluorostyrene 2,6-difluorostyrene, 3-nitrostyrene.

D is a moiety which contains at least one polymer chain which can be poly(acrylate), polyester or poly(ether). The number average molecular weight of the D moiety is in the range of 300 to 5000, or 500 to 3000, or 1000 to 2500 g/mole.

In one embodiment D may be an acrylic polymer represented by formula 16 where In indicates an initiator fragment from the initiator used to start the polymerization.

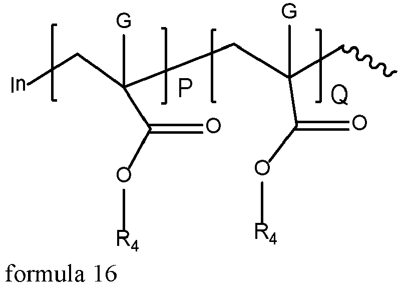

Preferably the poly(meth)acrylate may be prepared by Cobalt mediated Catalytic Chain Transfer Polymerization (CCTP) as described in Macromol. Chem Phys 2003, 204, 1406-1418. An example is a macromonomer prepared by Catalytic Chain Transfer Radical polymerization using Cobalt catalyst as described in Example 1 US6521715.

In one embodiment, Moiety D comprises of a polymer chain derived at least one of the following formulae 17-24:

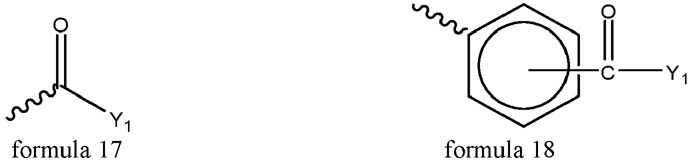

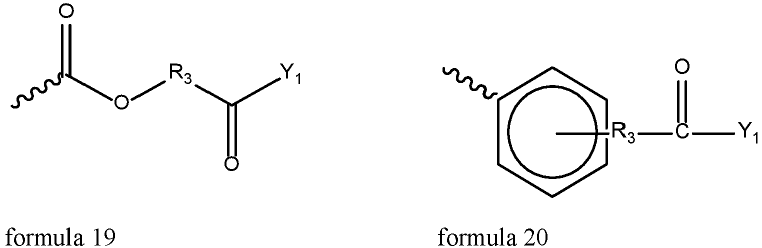

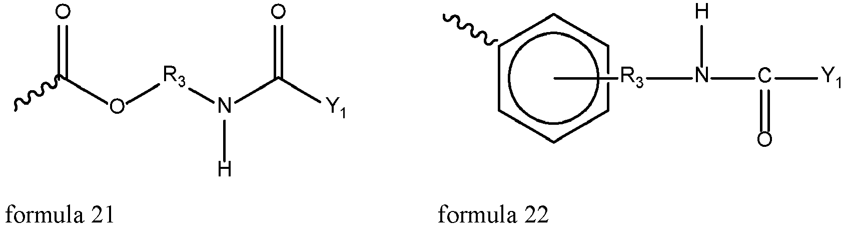

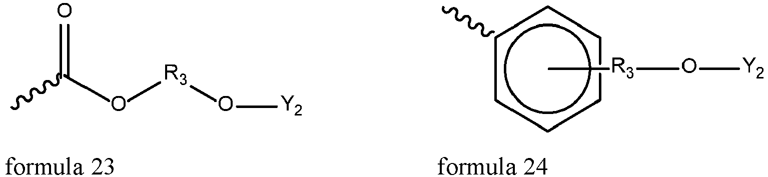

In one embodiment Y₁ is represented by a polymers shown in the table 1.0;
R₇ represents an alkylene group typically having 1 to 20 carbon atoms and the alkylene group may be linear or branched (typically linear);
P is an integer from 1 to 200;
Q is an integer from 1 to 200; and

**Table 1, Examples of Y₁**

| Polymer chain | Generic Structure for Y₁ (For homo polymers P may be equal to 0) |
|---|---|
| Polyether - commercially available as Bisomer^{®}polyeth-yleneglycol(meth)acrylates : PEM6 LD, PEA6, MPEG350MA, MPEG550MA, S10W, S20W and Bisomer^{®} Polypropylene glycol (meth)acrylates PPA6 and PPM55. | 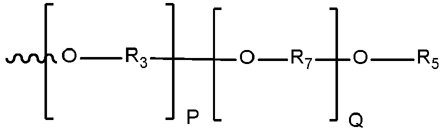 |
| Polyester is obtained/obtainable from a lactone or hydroxy carboxylic acid, typically containing 1 to 26 carbon atoms. | 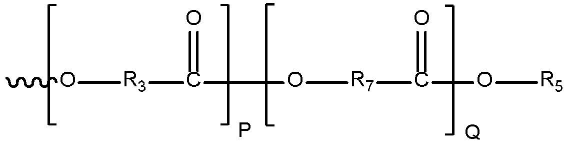 |
| Polyether-co-polyester | 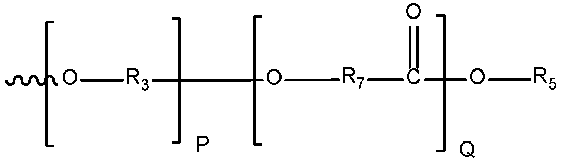 |
| Poly(acrylate) synthesized by transition metal mediated living polymerization, for example ATRP of methyl acrylate as described in Prog. Polym. Sci. 26 (2001) 337-377 using 2-hydroxyethyl 2-bromosiobutyrate as an initiator. | 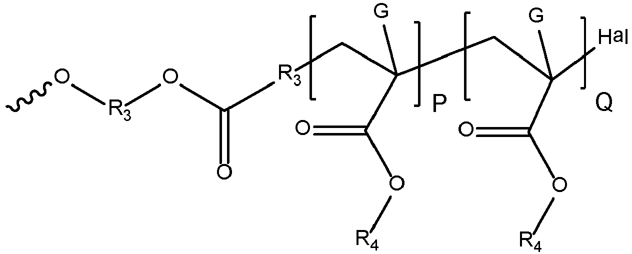 |
| Hal = bromine or chlorine | |
| Polyolefin - Polyisobutylene synthesized by reacting polyisobutenyl succinic anhydride (PIBSA) with a carboxyl amine | 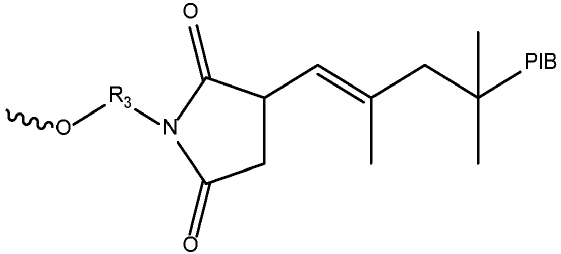 |

**Table 2.0 Examples of Y₂**

| Polymer chain | Generic Structure for Y₂ (For homo polymers P may be equal to 0) |
|---|---|
| Polyether obtained or obtainable from of ethylene oxide, propylene oxide, butylene oxide or styrene oxide or combination thereof. | 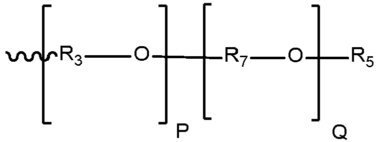 |
| Polyester is obtained/obtainable from a lactone or hydroxy carboxylic acid, typically containing 1 to 26 carbon atoms. | 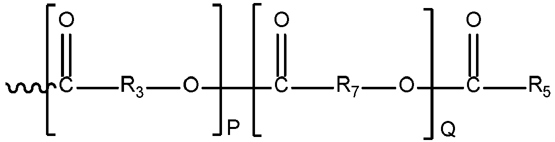 |
| Polyolefin - Polyisobutylene prepared by reacting polyisobutenyl succinic anhydride (PIBSA) with a hydroxyl amine | 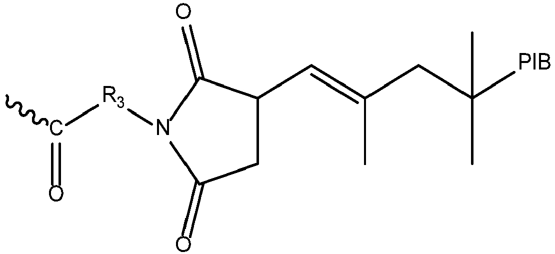 |

When Y₁ or Y₂ is a polyether the chain may be derived from the polymerization of ethylene oxide, propylene oxide, butylene oxide or styrene oxide and mixtures thereof in the presence of a hydroxyl functional (meth)acrylate and catalyst. Preferred monomers are hydroxyethyl acrylate or hydroxyethyl methacrylate.

When Y₁ or Y₂ is a polyester examples of suitable lactones include β-propri-olactone and optionally C₁₋₆-alkyl substituted δ-valerolactone and ε-caprolactone such as β-methyl-δ-valerolactone, δ-valerolactone, ε-caprolactone, 2-methyl-ε-caprolactone, 3-methyl-ε-caprolactone, 4-methyl-ε-caprolactone, 5-tert butyl-ε-caprolactone, 7-methyl-ε-caprolactone, 4,4,6-ε-caprolactone trimethyl-ε-caprolactone 4,6,6-trimethyl-ε-caprolactone, or mixtures thereof. In one embodiment, B is a moiety that contains at least one polyester chain derivable from δ-valerolactone and ε-caprolactone. The hydroxy carboxylic acid may be saturated or unsaturated, linear or branched. Examples of suitable hydroxy carboxylic acids are glycolic acid, lactic acid, 5-hydroxy valeric acid, 6-hydroxy caproic acid, ricinoleic acid, 12-hydroxy stearic acid, 12-hydroxydodecanoic acid, 5-hydroxydodecanoic acid, 5-hydroxydecanoic acid 4-hydroxydecanoic acid, or mixtures thereof.

When D is derived from a polyacrylate Y₁ or Y₂ is a poly(acrylate) alkyl acrylates or alkyl methacrylates are preferred for example methyl (meth)acrylate, ethyl (meth)acrylate, propyl (meth)acrylate, isopropyl (meth)acrylate, butyl (meth)acrylate, isobutyl (meth)acrylate, hexyl (meth)acrylate, 2-ethylhexyl (meth)acrylate, nonyl (meth)acrylate, lauryl (meth)acrylate, stearyl (meth)acrylate, cyclohexyl (meth)acrylate, isodecyl (meth)acrylate, isobornyl (meth)acrylate.

The polymer may also prepared by any known polymerization technique that involves a functional initiator, terminator or transfer agent. A preferred technique is the free radical polymerisation of alkyl (meth)acrylates in the presence of a functional chain transfer agent followed by a reaction with a vinyl isocyanate. The polymerisation of alkyl (meth)acrylates in the presence of mercaptoethanol is preferred followed by with either isopropenyl-dimethylbenzyl isocyanate (commercially available as TMI^{®} ex Cytec) or isocyanatoethyl methacrylate). Alternatively Atom Transfer Radical Polymerisation (ATRP) of alkyl (meth)acrylates followed by reaction with acrylic acid as described in Example 2 in US6936656 B2.

### PREPARATION OF AMINE MONOMER

An example of a tertiary amine functional monomer is dimethyl amino neopentyl acrylate obtainable from Bimax chemicals or dimethyl amino neopentyl methacrylate synthesized internally by Lubrizol.

The tertiary amine monomer can be prepared by reacting N,N-dimethylamino neopentane diamine with acrylic acid, methacrylic acid, beta carboxyethylacrylate, acryloyl chloride, methacryloyl chloride, acetoacetoxy ethyl methacrylate, 2-isocyanatoethyl methacrylate, glycidyl methacrylate, isopropenyl dimethyl phenyl isocyanate, diacetone acrylamide, or Karenez MOI-EG from Showa Denko. Karenez MOI-EG has the structure: 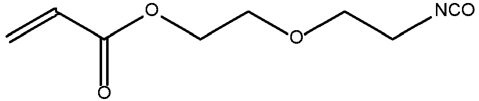 A similar reaction is shown in US 2012/0237465 paragraph 0332 where methyl methacrylate is reacted with 3-dimethylamino-2,2-dimethyl-1propanol in the presence of a catalyst for the esterification and with a polymerization inhibitor.

N,N dimethylamino neopentane diamine can be reacted with monomer before polymerization or with functional polymer after polymerization. Alternative amines shown in the below table:

**Table 3 Tertiary Amines capable of reacting with other compounds to form a monomer precursor to A group or to attach to a polymer to make the A group**

| Structure | CAS number |
|---|---|
| 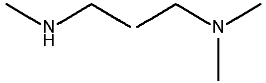 | 85996-44-7 |
| 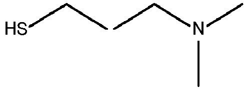 | 875251-13-1 |
| 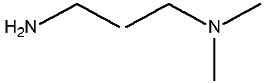 | 53369-71-4 |
| 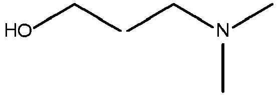 | 19059-68-8 |
| 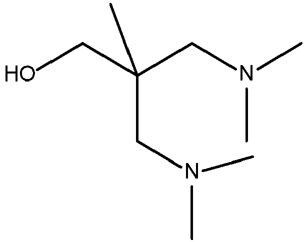 | 856084-43-0 |
| 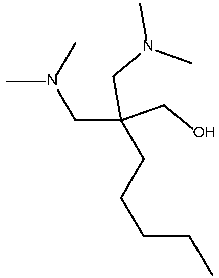 | 114644-14-3 |
| 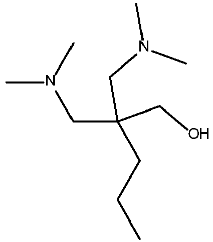 | 1195415-55-4 |
| 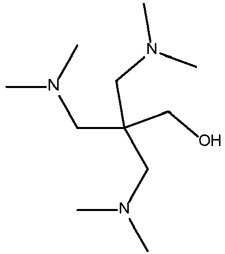 | 854665-46-6 |

The tertiary amines capable of reacting with other compounds to form a monomer precursor to the A group or to attach to a polymer to make the A group can be synthesized by a number of techniques including, but not limited to, the techniques/methods disclosed in US 8,766,011 for methods for synthesizing aminoalcohols.

Thermally stable tertiary amine groups of different structure can be made by substituting different reactants when forming the amine monomer. The structure above with CAS 19059-68-8 can be made by from dimethylamine, formaldehyde and isobutyraldehyde under Mannich reaction conditions to form the intermediate aldehyde and then simply hydrogenated to the alcohol. The alcohol can be reacted through a catalyzed esterification reaction with (meth)acrylic acid.

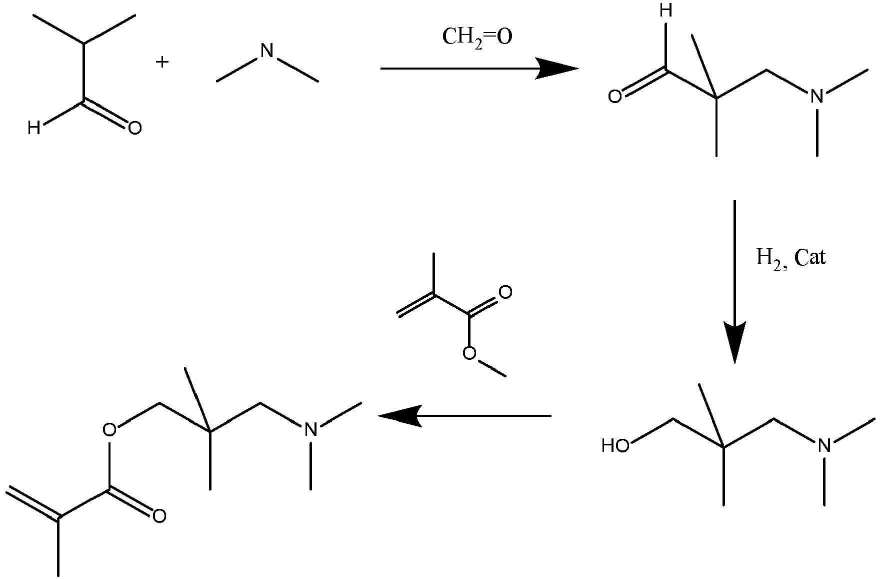

So using propionaldehyde instead of isobutyraldehyde, you could get the following:-

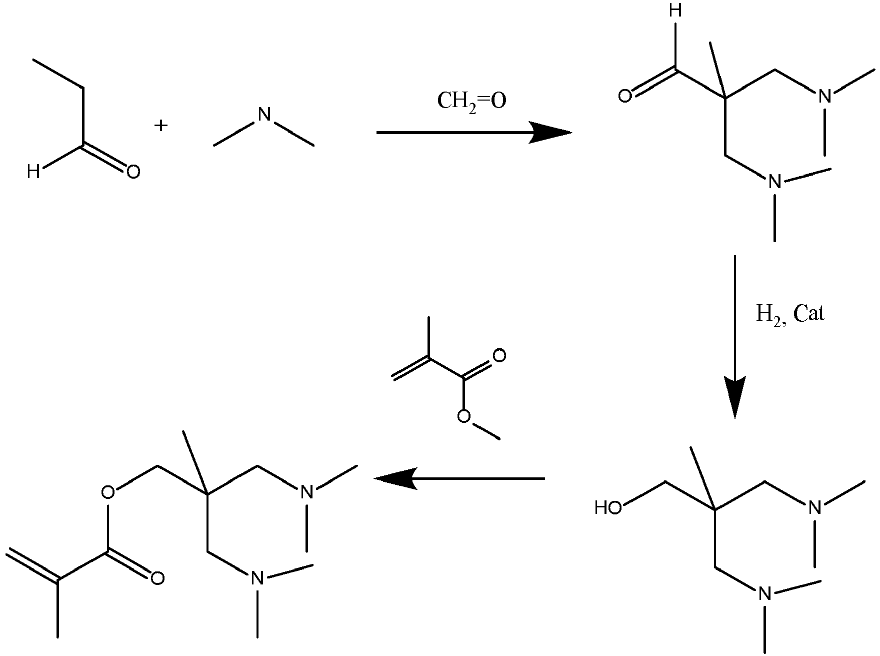

Therefore, preparing the alcohol intermediates and (meth)acrylates using aldehydes such as 2-methylbutyraldehyde, 2-ethylbutyraldehyde and 2-methylpentanal would provide sufficient variability in this respect. 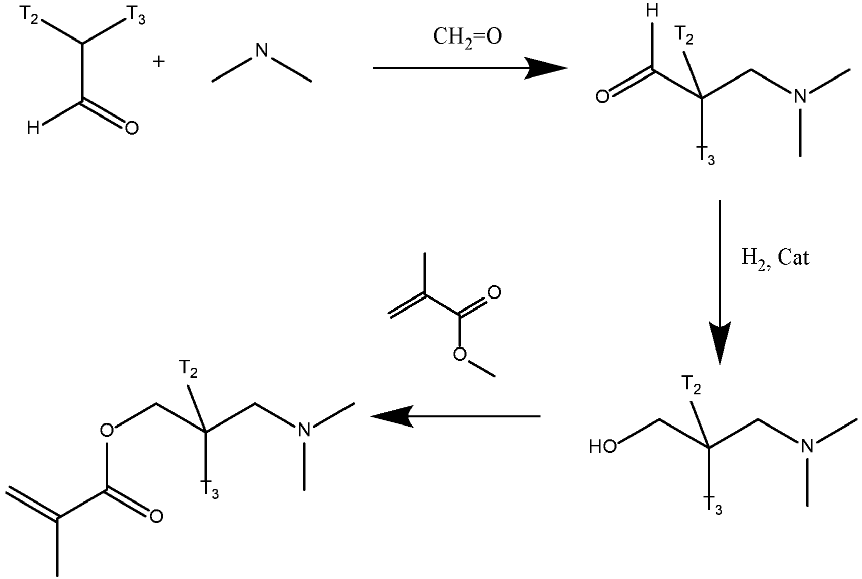
T₂ = Me, T₃ = Et 2-methylbutyraldehyde
T₂ = Me, T₃ = Pr 2-Methylpentanal
T₂ = Et, T₃ = Et 2-Ethylbutyraldehyde
T₂ = Me, T₃ = phenyl 2-Phenylpropionaldehyde

Other aldehydes than formaldehyde could be used and this would result in variable T4 being other than hydrogen.

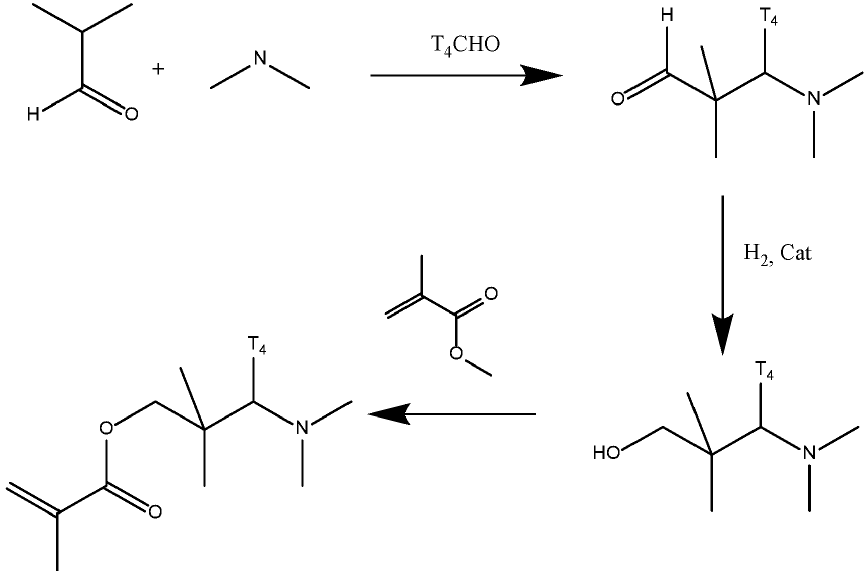

T₄ could be hydrogen when starting with formaldehyde. T₄ could be phenyl when benzaldehyde is used. T4 could be benzyl when phenylacetaldehyde is used. T4 could be cinnamyl (Ph-C(H)=C(H)- or an optional C₁-C₅ alkyl substituted cinnamyl if cinnamaldehyde or substituted cynnamaldehyde is used.

Heteroaromatic tertiary amine groups are recognised as particularly good anchor groups particularly imidazole functionalities. A tertiary amine containing monomer using a heteroaromatic tertiary amine could be made as shown below. An aliphatic cyclic tertiary amine group could also be made using this technology.

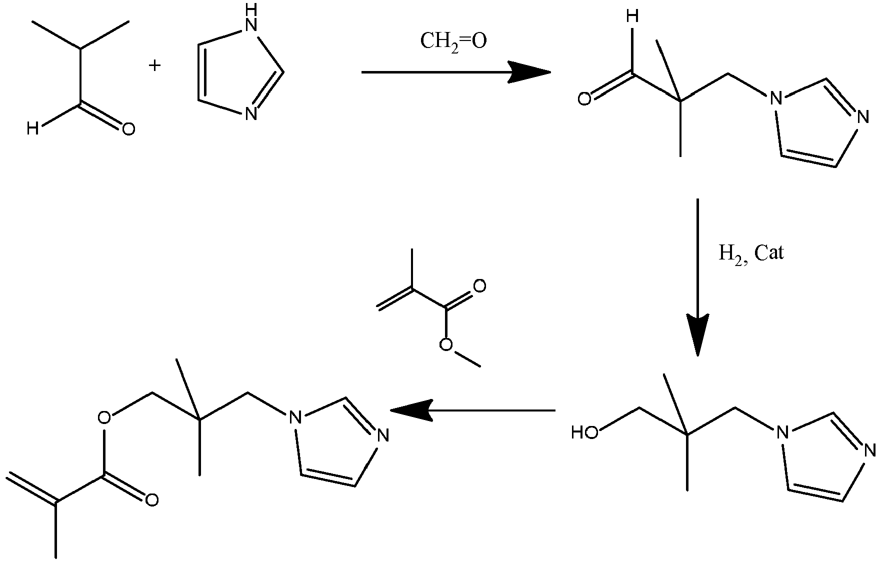

Combinations of the various T₂, T₃, T₄ and tertiary amine functionalities are also anticipated.

### COPOLYMER SYNTHESIS

The copolymer may be produced by polymerising together ethylenically unsaturated monomers. For the synthesis of a graft copolymer, free radical polymerisation is preferred, for the synthesis of a block copolymer living free radical polymerisation is preferred. Any controlled/living polymerisation may be used at this stage including Atom Transfer Radical Polymerisation (ATRP), Single-electron transfer living radical polymerization (SET-LRP), nitroxide mediated radical polymerisation (NMRP), radical addition fragmentation transfer (RAFT) polymerization, iodine transfer polymerization, selenium-centered radical mediated polymerization, telluride-mediated polymerization (TERP), stilbine mediated polymerization. Living free radical polymerizations provide the opportunity to add specific monomers and macromonomers in specific orders during dispersant polymerization (making well controlled block and comb type polymeric dispersants).

The dispersants typically have an anchoring portion, which generally anchors to the particulate, and a solubilizing portion, which generally favorably interacts with the media, and provides some form of colloidal stabilization against aggregation and/or agglomeration of the particulate when functioning as a dispersant.

It is desirable to have from 1 to 50 tertiary aliphatic amine groups attached per polymeric dispersant and more desirably from about 2 to about 25. It is desirable that the weight percent of the tertiary aliphatic amine groups is from about 5 to about 20 wt. % of the weight of the dispersant. For this wt. % calculation the tertiary amine groups includes the nitrogen atom, the alkyl group substituents on the nitrogen atoms, the alpha and beta carbon atoms from the nitrogen atoms connecting the nitrogen to the rest of the dispersant, and any substituents on the alpha and beta carbon atoms. It is desirable that the weight percent of the tertiary aliphatic amine groups is just the weight percent of the aliphatic amine groups as defined and does not include the weight of the counter ions associated with the quaternized amine.

### COPOLYMER SYNTHESIS

In one embodiment, the graft copolymer may be produced by polymerizing together monomers represented by formulae (a), (b), (c), and (d) 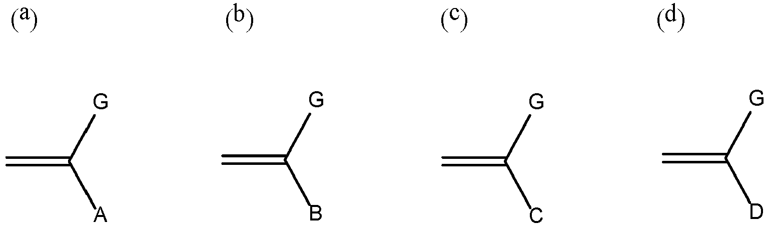 wherein G, A, B, C, and D are the same as defined above.

The copolymer may be produced by polymerising together ethylenically unsaturated monomers or by post polymerization functionalization of a polymer with the various specified functional groups and connecting groups. Polymerizing together ethylenically unsaturated monomers with the necessary functional groups and optional macromonomers is preferred. For the synthesis of Embodiment 4 (graft copolymer) a controlled radical polymerisation process may not be necessary

In one embodiment, the graft copolymer is polymerised by a free radical polymerisation in the presence of a chain transfer agent. Examples of a free radical chain transfer agent include catalytic cobalt chain transfer agents or mercaptans. Mercaptans are particularly useful. In another embodiment, the graft copolymer is polymerised by a free radical polymerisation in the presence of a RAFT agent (a reversible addition, fragmentation chain transfer agent).

Examples of mercaptans include 2-mercaptoethanol, 3-mercaptopropanol, thiopropyleneglycol, thioglycerine, thioglycolic acid, thiohydracrylic acid, thiolactic acid and thiomalic acid, isooctyl thioglycolate, n-butyl 3-mercaptopropionate, n-butyl thioglycolate, glycol dimercaptoacetate, trimethylolpropane trithioglycolate, or mixtures thereof. If the polymerisation is performed in solvent preferred examples of mercaptans include isooctyl thioglycolate, n-butyl 3-mercaptopropionate, n-butyl thioglycolate, glycol dimercaptoacetate, trimethylolpropane trithioglycolate, or mixtures thereof. In one embodiment, the mercaptan is butyl 3-mercaptopropionate.

Examples of a RAFT chain transfer agent include benzyl 1-(2-pyrrolidinone)carbodithioate, benzyl (1,2-benzenedicarboximido) carbodithioate, 2-cyanoprop-2-yl 1-pyrrolecarbodithioate, 2-cyanobut-2-yl 1-pyrrolecarbodithioate, benzyl 1-imidaz-olecarbodithioate, N,N-dimethyl-S-(2-cyanoprop-2-yl)dithiocarbamate, N,N-diethyl-S-benzyl dithiocarbamate, cyanomethyl 1-(2-pyrrolidone) carbodithoate, cumyl dithiobenzoate, 2-dodecylsulphanylthiocarbonylsulphanyl-2-methyl-propionic acid butyl ester, O-phenyl-S-benzyl xanthate, N,N-diethyl S-(2-ethoxy-carbonylprop-2-yl) dithiocarbamate, dithiobenzoic acid, 4-chlorodithiobenzoic acid, O-ethyl-S-(1-phenylethyl)xanthate, O-ethyl-S-(2-(ethoxycarbonyl)prop-2-yl)xanthate, O-ethyl-S-(2-cyanoprop-2-yl)xanthate, O-ethyl-S-(2-cyanoprop-2-yl)xanthate, O-ethyl-S-cyanomethyl xanthate, O-pentafluorophenyl-S-benzyl xanthate, 3-benzylthio-5,5-dimethylcyclohex-2-ene-1-thione or benzyl 3,3-di(benzylthio)prop-2-enedithioate, S,S'-bis-(α,α'-disubstituted-α"-acetic acid)-trithiocarbonate, S,S'-bis-(α,α'-disubstituted-α"-acetic acid)-trithiocarbonate or S-alkyl-S'-(α,α'-disubstituted-α"-acetic acid)-trithiocarbonates, benzyl dithiobenzoate, 1-phenylethyl dithiobenzoate, 2-phenylprop-2-yl dithiobenzoate, 1-acetoxyethyl dithiobenzoate, hexakis(thiobenzoylthiomethyl)benzene, 1,4-bis(thiobenzoylthiomethyl)benzene, 1,2,4,5-tetrakis(thiobenzoylthiomethyl)benzene, 1,4-bis-(2-(thiobenzoylthio)prop-2-yl)-benzene, 1-(4-methoxyphenyl)ethyl dithiobenzoate, benzyl dithioacetate, ethoxycarbonylmethyl dithioacetate, 2-(ethoxycarbonyl)prop-2-yl dithiobenzoate, 2,4,4-trimethylpent-2-yl dithiobenzoate, 2-(4-chlorophenyl)prop-2-yl dithiobenzoate, 3-vinylbenzyl dithiobenzoate, 4-vinylbenzyl dithiobenzoate, S-benzyl diethoxyphosphinyldithioformate, tert-butyl trithioperbenzoate, 2-phenylprop-2-yl 4-chlorodithiobenzoate, 2-phenylprop-2-yl 1-di-thionaphthalate, 4-cyanopentanoic acid dithiobenzoate, dibenzyl tetrathioterephthalate, dibenzyl trithiocarbonate, carboxymethyl dithiobenzoate or poly(ethylene oxide) with dithiobenzoate end group, or mixtures thereof.

Polymerisation in the presence of RAFT chain transfer agents is described in more detail in the Handbook of Radical Polymerization, edited by Krzysztof Matyjaszewski and Thomas P. Davis, 2002, Chapter 12, pages 629 to 690, published by John Wiley and Sons Inc. (hereinafter referred to as "Matyjaszewski et al."). A discussion of the polymer mechanism of RAFT polymerisation is shown on page 664 to 665 in section 12.4.4 of Matyj aszewski et al.

If a solvent is used in the polymerisation process, suitable solvents include alcohols, such as methanol, ethanol, n-propanol, isopropanol, butanol, butoxyethanol; ketones, such as acetone, butanone, pentanone, hexanone and methyl ethyl ketone; alkyl esters of acetic, propionic and butyric acids, such as ethyl acetate, butyl acetate, amyl acetate, methoxy propyl acetate; ethers, such as tetrahydrofuran, diethyl ether, and ethylene glycol and polyethylene glycol monoalkyl and dialkyl ethers such as cellusolves and carbitols; and, glycols such as ethylene glycol and propylene glycol; and mixtures thereof. Esters and/or ketones and mixtures of esters and/or ketones with alcohols are particularly useful. In one embodiment, butyl acetate and methoxypropyl acetate and mixtures of butyl acetate or methoxypropyl acetate with alcohols are used as the solvent.

Polymerisation may be carried out at any suitable temperature for the solvent selected. Typically, polymerisation may be carried out in the presence of solvent at a temperature in the range of 50 °C to 150 °C, or 60 °C to 120 °C.

Any polymerisation initiator may be used. In one embodiment, the polymerisation initiator is any free radical polymerisation initiator; and the choice of initiator will be influenced by the polymerisation temperature and polymerisation process. The polymerisation initiators used in this process are known in the art and are selected from the conventional free radical initiators such as organic peroxides and azo compounds. The particular free radical initiator employed will depend upon the monomeric material(s) being polymerised and the process conditions. Typically, the amount of initiator may be in the range of 0.005 parts by weight to 5.00 parts by weight, based on 100 parts by weight of the monomer. However, 0.01 parts by weight to 2.00 parts by weight based on 100 parts by weight of monomer(s) is particularly useful.

Examples of suitable peroxide initiators include diacyl peroxides, dialkylperoxydicarbonates, t-alkyl peroxyesters, monoperoxycarbonates, diperoxyketals, diaklyperoxides, t-alkyl hydroperoxides, and ketone peroxide. Examples of diacyl peroxides are dibenzoyl peroxide, di(2,4-dichlorobenzoyl) peroxide, diacetyl peroxide, dilauroyl peroxide, didecanoyl peroxide, diisononanoyl peroxide, succinic acid peroxide. Examples of suitable azo initiators include 2,2'-azobis(4-methoxy-2,4-dimethylvaleronitrile), 2,2'-azobis(2,4-dimethyl-valeronitrile, 2,2'-azobisisobutyronitrile, dimethyl 2,2'-azobisisobutyrate, 2,2'-azobis(2-methyl-butyronitrile), 1,1'-azobis(1-cyclohexanecarbonitrile), 2-(carbamoylazo)-isobutyronitrile, 2,2'-azobis(2,4,4-trimethyl-pentane.

The polymerisation temperature depends on the type of initiator used. In one embodiment, the initiator is selected so that polymerisation may be performed at a temperature of 50 °C and 100 °C, or between 60 °C and 90 °C. Typically, the initiators for use in the current invention include lauroyl peroxide, benzoyl peroxide, 1,1'-azobis(1-cyclohexanecarbonitrile), or 2,2'-azobisisobutyronitrile.

### Industrial Application

The particulate solid present in the composition may be any inorganic or organic solid material which is substantially insoluble in the organic medium at the temperature concerned and which it is desired to stabilize in a finely divided form therein. The particulate solids may be in the form of a granular material, a fibre, a platelet or in the form of a powder, often a blown powder. In one embodiment, the particulate solid is a pigment.

The particulate solid (typically a pigment or filler) may have an average particle size measured by light scattering measurements of from 10 nanometers to 10 microns, or 10 nanometers to 1, 2, 3, or 5 microns, or 20 nanometers to 1, 2, 3, or 5 microns in diameter.

Examples of suitable solids are pigments for solvent inks; pigments, extenders, fillers, blowing agents and flame retardants for paints and plastic materials; dyes, especially disperse dyes; optical brightening agents and textile auxiliaries for solvent dyebaths; pigments for inks, toners and other solvent application systems; solids for oil-based and inverse-emulsion drilling muds; dirt and solid particles in dry cleaning fluids; metals; particulate ceramic materials and magnetic materials for ceramics, piezoceramic printing, refractories, abrasives, foundry, capacitors, fuel cells, ferrofluids, conductive inks, magnetic recording media, water treatment and hydrocarbon soil remediation; organic and inorganic nanodisperse solids; metal, metal oxides and carbon for electrodes in batteries, fibres such as wood, paper, glass, steel, carbon and boron for composite materials; and biocides, agrochemicals and pharmaceuticals which are applied as dispersions in organic media.

In one embodiment, the solid is an organic pigment from any of the recognised classes of pigments described, for example, in the Third Edition of the Colour Index (1971) and subsequent revisions of, and supplements thereto, under the chapter headed "Pigments". Examples of organic pigments are those from the azo, disazo, trisazo, condensed azo, azo lakes, naphthol pigments, anthanthrone, anthrapyrimidine, anthraquinone, benzimidazolone, carbazole, diketopyrrolopyrrole, flavanthrone, indigoid pigments, indanthrone, isodibenzanthrone, isoindanthrone, isoindolinone, isoindoline, isoviolanthrone, metal complex pigments, oxazine, perylene, perinone, pyranthrone, pyrazoloquinazolone, quinacridone, quinophthalone, thioindigo, triarylcarbonium pigments, triphendioxazine, xanthene and phthalocyanine series, especially copper and/or zinc phthalocyanine and its nuclear halogenated derivatives, and also lakes of acid, basic and mordant dyes. Carbon black, although strictly inorganic, behaves more like an organic pigment in its dispersing properties. In one embodiment, the organic pigments are phthalocyanines, especially copper phthalocyanines, monoazos, disazos, indanthrones, anthranthrones, quinacridones, diketopyrrolopyrroles, perylenes and carbon blacks.

Examples of inorganic pigments include metallic oxides such as titanium dioxide, rutile titanium dioxide and surface coated titanium dioxide, titanium oxides of different colours such as yellow and black, iron oxides of different colours such as yellow, red, brown and black, zinc oxide, zirconium oxides, aluminium oxide, oxymetallic compounds such as bismuth vanadate, cobalt aluminate, cobalt stannate, cobalt zincate, zinc chromate and mixed metal oxides of two or more of manganese, nickel, titanium, chromium, antimony, magnesium, cobalt, iron or aluminium, Prussian blue, vermillion, ultramarine, zinc phosphate, zinc sulphide, molybdates and chromates of calcium and zinc, metal effect pigments such as aluminium flake, copper, and copper/zinc alloy, pearlescent flake such as lead carbonate and bismuth oxychloride.

Inorganic solids include extenders and fillers such as ground and precipitated calcium carbonate, calcium sulphate, calcium oxide, calcium oxalate, calcium phosphate, calcium phosphonate, barium sulphate, barium carbonate, magnesium oxide, magnesium hydroxide, natural magnesium hydroxide or brucite, precipitated magnesium hydroxide, magnesium carbonate, dolomite, aluminium trihydroxide, aluminium hydroperoxide or boehmite, calcium and magnesium silicates, aluminosilicates including nanoclays, kaolin, montmorillonites including bentonites, hectorites and saponites, ball clays including natural, synthetic and expandable, mica, talc including muscovites, phlogopites, lepidolites and chlorites, chalk, synthetic and precipitated silica, fumed silica, metal fibres and powders, zinc, aluminium, glass fibres, refractory fibres, carbon black including single- and multiwalled carbon nanotubes, reinforcing and non-reinforcing carbon black, graphite, Buckminsterfullerenes, asphaltene, graphene, diamond, alumina, quartz, perlite, pegmatite, silica gel, wood flour, wood flake including soft and hard woods, saw dust, powdered paper/fibre, cellulosic fibres such as kenaf, hemp, sisal, flax, cotton, cotton linters, jute, ramie, rice husk or hulls, raffia, typha reed, coconut fibre, coir, oil palm fibre, kapok, banana leaf, caro, curaua, henequen leaf, harakeke leaf, abaca, sugar cane bagasse, straw, bamboo strips, wheat flour, MDF and the like, vermiculite, zeolites, hydrotalcites, fly ash from power plants, incinerated sewage sludge ash, pozzolanes, blast furnace slag, asbestos, chrysotile, anthophylite, crocidolite, wollastonite, attapulgite and the like, particulate ceramic materials such as alumina, zirconia, titania, ceria, silicon nitride, aluminium nitride, boron nitride, silicon carbide, boron carbide, mixed silicon-aluminium nitrides and metal titanates; particulate magnetic materials such as the magnetic oxides of transition metals, often iron and chromium, e.g., gamma-Fe₂O₃, Fe₃O₄, and cobalt-doped iron oxides, ferrites, e.g. barium ferrites; and metal particles, for instance metallic aluminium, iron, nickel, cobalt, copper, silver, gold, palladium, and platinum and alloys thereof.

Other useful solid materials include flame retardants such as pentabromodiphenyl ether, octabromodiphenyl ether, decabromodiphenyl ether, hexabromocyclododecane, ammonium polyphosphate, melamine, melamine cyanurate, antimony oxide and borates; biocides or industrial microbial agents such as those mentioned in tables 2, 3, 4, 5, 6, 7, 8 and 9 of the chapter entitled "Industrial Microbial Agents" in Kirk-Othmer's Encyclopedia of Chemical Technology, Volume 13, 1981, 3rd Edition, and agrochemicals such as the fungicides flutriafen, carbendazim, chlorothalonil and mancozeb.

The continuous medium in this disclosure can be water, a polar organic solvent, a non-polar organic solvent, or a polymer or compatible blends thereof (wherein compatible is used to indicate a one-phase system under the intended conditions of temperature, pressure, etc. The organic medium present in the composition of the invention in one embodiment is a plastics material and in another embodiment an organic liquid. The organic liquid may be a non-polar or a polar organic liquid. By the term "polar" in relation to the organic liquid it is meant that an organic liquid is capable of forming moderate to strong bonds as described in the article entitled "A Three Dimensional Approach to Solubility" by Crowley et al in Journal of Paint Technology, Vol. 38, 1966, at page 269. Such organic liquids generally have a hydrogen bonding number of 5 or more as defined in the above-mentioned article.

Examples of suitable polar organic liquids are amines, ethers, especially lower alkyl ethers, organic acids, esters, ketones, glycols, glycol ethers, glycol esters, alcohols and amides. Numerous specific examples of such moderately strongly hydrogen bonding liquids are given in the book entitled "Compatibility and Solubility" by Ibert Mellan (published in 1968 by Noyes Development Corporation) in Table 2.14 on pages 39-40 and these liquids all fall within the scope of the term polar organic liquid as used herein.

In one embodiment, polar organic liquids are dialkyl ketones, alkyl esters of alkane carboxylic acids and alkanols, especially such liquids containing up to, and including, a total of 6 carbon atoms. As examples of the polar organic liquids include dialkyl and cycloalkyl ketones, such as acetone, methyl ethyl ketone, diethyl ketone, di-isopropyl ketone, methyl isobutyl ketone, di-isobutyl ketone, methyl isoamyl ketone, methyl n-amyl ketone and cyclohexanone; alkyl esters such as methyl acetate, ethyl acetate, isopropyl acetate, butyl acetate, ethyl formate, methyl propionate, methoxypropyl acetate and ethyl butyrate; glycols and glycol esters and ethers, such as ethylene glycol, 2-ethoxyethanol, 3-methoxypropylpropanol, 3-ethoxypropylpropanol, 2-butoxyethyl acetate, 3-methoxypropyl acetate, 3-ethoxypropyl acetate and 2-ethoxyethyl acetate; alkanols such as methanol, ethanol, n-propanol, isopropanol, n-butanol and isobutanol (also known as 2-methylpropanol), terpineol and dialkyl and cyclic ethers such as diethyl ether and tetrahydrofuran. In one embodiment, solvents are alkanols, alkane carboxylic acids and esters of alkane carboxylic acids. In one embodiment, the present invention is suitable for organic liquids that are substantially non-soluble in an aqueous medium. Furthermore a person skilled in the art will appreciate that small quantities of an aqueous medium (such as glycols, glycol ethers, glycol esters and alcohols) may be present in the organic liquids provided the overall organic liquid is substantially non-soluble in an aqueous medium.

Examples of organic liquids, which may be used as polar organic liquids are film-forming resins such as are suitable for the preparation of inks, paints and chips for use in various applications such as paints and inks. Examples of such resins include polyamides, such as Versamid^{™} and Wolfamid^{™}, and cellulose ethers, such as ethyl cellulose and ethyl hydroxyethyl cellulose, nitrocellulose and cellulose acetate butyrate resins, including mixtures thereof. Examples of paint resins include short oil alkyd/melamine-formaldehyde, polyester/melamine-formaldehyde, thermosetting acrylic/melamine-formaldehyde, long oil alkyd, medium oil alkyd, short oil alkyd, polyether polyols and multimedia resins such as acrylic and urea/aldehyde.

The organic liquid may be a polyol, that is to say, an organic liquid with two or more hydroxy groups. In one embodiment, polyols include alpha-omega diols or alpha-omega diol ethoxylates.

In one embodiment, non-polar organic liquids are compounds containing aliphatic groups, aromatic groups or mixtures thereof. The non-polar organic liquids include non-halogenated aromatic hydrocarbons (e.g. toluene and xylene), halogenated aromatic hydrocarbons (e.g. chlorobenzene, dichlorobenzene, chlorotoluene), non-halogenated aliphatic hydrocarbons (e.g. linear and branched aliphatic hydrocarbons containing six or more carbon atoms both fully and partially saturated), halogenated aliphatic hydrocarbons (e.g. dichloromethane, carbon tetrachloride, chloroform, trichloroethane) and natural non-polar organics (e.g. vegetable oil, sunflower oil, rapeseed oil, linseed oil, terpenes and glycerides).

In one embodiment, the organic liquid comprises at least 0.1% by weight, or 1% by weight or more of a polar organic liquid based on the total organic liquid. The organic liquid optionally further comprises water. In one embodiment, the organic liquid is free of water.

The plastics material may be a thermosetting resin or a thermoplastic resin. The thermosetting resins useful in this invention include resins which undergo a chemical reaction when heated, catalyzed, or subject to ultra-violet, laser light, infra-red, cationic, electron beam, or microwave radiation and become relatively infusible. Typical reactions in thermosetting resins include oxidation of unsaturated double bonds, reactions involving epoxy/amine, epoxy/carbonyl, epoxy/hydroxyl, reaction of epoxy with a Lewis acid or Lewis base, polyisocyanate/hydroxy, amino resin/hydroxy moieties, free radical reactions or polyacrylate, cationic polymerization of epoxy resins and vinyl ether and condensation of silanol. Examples of unsaturated resins include polyester resins made by the reaction of one or more diacids or anhydrides with one or more diols. Such resins are commonly supplied as a mixture with a reactive monomer such as styrene or vinyltoluene and are often referred to as orthophthalic resins and isophthalic resins. Further examples include resins using dicyclopentadiene (DCPD) as a co-reactant in the polyester chain. Further examples also include the reaction products of bisphenol A diglycidyl ether with unsaturated carboxylic acids such as methacrylic acid, subsequently supplied as a solution in styrene, commonly referred to as vinyl ester resins.

In one embodiment, the thermosetting composite or thermosetting plastic may be a polyester, a polyvinyl acetate, a polyester resin in styrene, a polystyrene, or mixtures thereof.

Polymers with hydroxy functionality (frequently polyols) are widely used in thermosetting systems to crosslink with amino resins or polyisocyanates. The polyols include acrylic polyols, alkyd polyols, polyester polyols, polyether polyols and polyurethane polyols. Typical amino resins include melamine formaldehyde resins, benzoguanamine formaldehyde resins, urea formaldehyde resins and glycoluril formaldehyde resins. Polyisocyanates are resins with two or more isocyanate groups, including both monomeric aliphatic diisocyanates, monomeric aromatic diisocyanates and their polymers. Typical aliphatic diisocyanates include hexamethylene diisocyanate, isophorone diisocyanate and hydrogenated diphenylmethane diisocyanate. Typical aromatic isocyanates include toluene diisocyanates and diphenylmethane diisocyanates.

In one embodiment, thermoplastic resins include polyolefins, polyesters, polyamides, polycarbonates, polyurethanes, polystyrenics, poly(meth)acrylates, celluloses and cellulose derivatives. Said compositions may be prepared in a number of ways but melt mixing and dry solid blending are typical methods. Examples of a suitable thermoplastic include (low density, or linear low density or high density) polyethylene, polypropylene, polystyrene, polyethylene terephthalate (PET), polybutylene terephthalate (PBT), nylon 6, nylon 6/6, nylon 4/6, nylon 6/12, nylon 11 and nylon 12, polymethylmethacrylate, polyethersulphone, polysulphones, polycarbonate, polyvinyl chloride (PVC), thermoplastic polyurethane, ethylene vinyl acetate (EVA), Victrex PEEK^{™} polymers (such as oxy-1, 4-phenylenoeoxy-1, 4-phenylene-carbonyl-1, 4-phenylene polymers) and acrylonitrile butadiene styrene polymers (ABS); and various other polymeric blends or alloys.

If desired, the compositions of the present invention may contain other ingredients, for example resins (where these do not already constitute the organic medium), binders, co-solvents, cross-linking agents, fluidising agents, wetting agents, anti-sedimentation agents, plasticisers, surfactants, dispersants other than the compound of the present invention, humectants, anti-foamers, anti-cratering agents, rheology modifiers, heat stabilizers, light stabilizers, UV absorbers, antioxidants, leveling agents, gloss modifiers, biocides and preservatives.

If desired, the compositions containing plastic material may contain other ingredients, for example dispersants other than the compound of the present invention, antifogging agents, nucleators, blowing agents, flame retardants, process aids, surfactants, plasticisers, heat stabilizers, UV absorbers, anti-oxidants, fragrances, mould release aids, anti-static agents, anti-microbial agents, biocides, coupling agents, lubricants (external and internal), impact modifiers, slip agents, air release agents and viscosity depressants.

The compositions typically contain from 1 to 95% by weight of the particulate solid (dispersed phase), the precise quantity depending on the nature of the solid and the quantity depending on the nature of the solid and the relative densities of the continuous media. For example, a composition in which the solid is an organic material, such as an organic pigment, in one embodiment contains from 15 to 60% by weight of the solid whereas a composition in which the solid is an inorganic material, such as an inorganic pigment, filler or extender, in one embodiment contains from 40 to 90% by weight of the solid based on the total weight of composition.

The compositions containing an organic liquid may be prepared by any of the conventional methods known for preparing dispersions. Thus, the solid, the organic medium and the dispersant may be mixed in any order, the mixture then being subjected to a mechanical treatment to reduce the particles of the solid to an appropriate size, for example by high speed mixing, ball milling, basket milling, bead milling, gravel milling, sand grinding, attritor grinding, two roll or three roll milling, plastic milling until the dispersion is formed. Alternatively, the solid may be treated to reduce its particle size independently or in admixture with either the organic medium or the dispersant, the other ingredient or ingredients then being added and the mixture being agitated to provide the composition. The composition can also be made by grinding or milling the dry solid with the dispersant and then adding the liquid medium or mixing the solid with the dispersant in a liquid medium in a pigment flushing process.

The composition containing the plastic material may be prepared by any of the conventional methods known for preparing thermoplastic compounds. Thus, the solid, the thermoplastic polymer, and the dispersant may be mixed in any order, the mixture then being subjected to a mechanical treatment to reduce the particles of the solid or disperse them in an appropriate size, for example, by Banbury mixing, ribbon blending, twin-screw extrusion, twin-roll milling, compounding in a Buss co-kneader, or similar equipment. Master batches of the pigments in the particular plastic or rubber can also be made and that master batch can then be diluted with addition plastic or rubber to make the final composition.

The composition of the present invention is particularly suited to liquid dispersions. In one embodiment, such dispersion compositions comprise:
from 0.5 to 80 parts of a particulate solid;
b) from 0.1 to 79.6 parts of a polymer of formula (1); and
c) from 19.9 to 99.4 parts of an organic liquid and/or water;
wherein all relative parts are by weight and the amounts (a) +(b) +(c) = 100.

In one embodiment, component a) comprises from 0.5 to 30 parts of a pigment and such dispersions are useful as (liquid) inks, paints and millbases.

If a composition is required comprising a particulate solid and a dispersant of formula (1) in dry form, the organic liquid is typically volatile so that it may be readily removed from the particulate solid by a simple separation means such as evaporation. In one embodiment, the composition comprises the organic liquid.

If the dry composition consists essentially of the dispersant of formula (1) and the particulate solid, it typically contains at least 0.2%, at least 0.5% or at least 1.0% dispersant of formula (1) based on weight of the particulate solid. In one embodiment, the dry composition contains not greater than 100%, not greater than 50%, not greater than 20% or not greater than 10% by weight of dispersant of formula (1) based on the weight of the particulate solid.

As disclosed hereinbefore, the compositions of the invention are suitable for preparing millbases wherein the particulate solid is milled in an organic liquid in the presence of a compound for formula (1).

Thus, according to a still further aspect of the invention there is provided a millbase comprising a particulate solid, an organic liquid and a polymer of formula (1).

Typically, the millbase contains from 20 to 70% by weight particulate solid based on the total weight of the millbase. In one embodiment, the particulate solid is not less than 10 or not less than 20% by weight of the millbase. Such millbases may optionally contain a binder added either before or after milling.

In one embodiment, the binder is a polymeric material capable of binding the composition on volatilisation of the organic liquid.

Binders are polymeric materials including natural and synthetic materials. In one embodiment, binders include poly(meth)acrylates, polystyrenics, polyesters, polyurethanes, alkyds, polysaccharides such as cellulose, nitrocellulose, and natural proteins such as casein. The binder may be nitrocellulose. In one embodiment, the binder is present in the composition at more than 100% based on the amount of particulate solid, more than 200%, more than 300% or more than 400%.

The amount of optional binder in the millbase can vary over wide limits but is typically not less than 10%, and often not less than 20% by weight of the continuous/liquid phase of the millbase. In one embodiment, the amount of binder is not greater than 50% or not greater than 40% by weight of the continuous/liquid phase of the millbase.

The amount of dispersant in the millbase is dependent on the amount of particulate solid but is typically from 0.5 to 5% by weight of the millbase.

Dispersions and millbases made from the composition of the invention are particularly suitable for use in non-aqueous and solvent free formulations in which energy curable systems (ultra-violet, laser light, infra-red, cationic, electron beam, microwave) are employed with monomers, oligomers, etc. or a combination present in the formulation. They are particularly suitable for use in coatings such as paints, varnishes, inks, other coating materials and plastics. Suitable examples include their use in low, medium and high solids paints, general industrial paints including baking, two component and metal coating paints such as coil and can coatings, powder coatings, UV-curable coatings, wood varnishes; inks, such as flexographic, gravure, offset, lithographic, letterpress or relief, screen printing and printing inks for packaging printing, non-impact inks such as inkjet inks including continuous inkjet and drop on demand inkjet which include thermal, piezo and electrostatic, phase change inks and hot melt wax inks, inks for ink-jet printers and print varnishes such as overprint varnishes; polyol and plastisol dispersions; non-aqueous ceramic processes, especially tape-casting, gel-casting, doctor-blade, extrusion and injection moulding type processes, a further example would be in the preparation of dry ceramic powders for isostatic pressing; composites such as sheet moulding and bulk moulding compounds, resin transfer moulding, pultrusion, hand-lay-up and spray-lay-up processes, matched die moulding; construction materials like casting resins, cosmetics, personal care like nail coatings, sunscreens, adhesives, toners such as liquid toners, plastics materials and electronic materials such as coating formulations for colour filter systems in displays including organic light-emitting diode (OLED) devices, liquid crystal displays and electrophoretic displays, glass coatings including optical fibre coatings, reflective coatings or anti-reflective coatings, conductive and magnetic inks and coatings. They are useful in the surface modification of pigments and fillers to improve the dispersibility of dry powders used in the above applications. Further examples of coating materials are given in Bodo Muller, Ulrich Poth, Lackformulierung und Lackrezeptur, Lehrbuch fr Ausbildung und Praxis, Vincentz Verlag, Hanover (2003) and in P.G.Garrat, Strahlenhartung, Vincentz Verlag, Hanover (1996). Examples of printing ink formulations are given in E.W.Flick, Printing Ink and Overprint Varnish Formulations - Recent Developments, Noyes Publications, Park Ridge NJ, (1990) and subsequent editions

In one embodiment, the composition of the invention further includes one or more additional known dispersants.

The invention herein is useful for making various particulate dispersions that go into inks, coatings and pigmented or filled polymer systems.

### EXAMPLES

The comparative examples comprise dimethylaminoethyl methacrylate (DMAEMA) and the patent examples comprise dimethylaminoneopentyl methacrylate (DMANPMA). In this way we show the effect of the two methyl groups in the β position relative to the nitrogen atom.

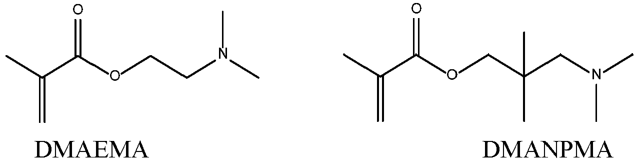

### Intermediate A

ε-caprolactone (200 parts) and 1-dodecanol (23.32 parts) are stirred together under nitrogen at 120 °C. Stannous chloride catalyst (0.002 parts) was then added and the reactants stirred under nitrogen for approximately 20 hours at 120 °C. The reactants were then cooled to 70 °C. Then 3-isopropenyl-α,α-dimethylbenzyl isocyanate (26.5 parts) and dibutyltin dilaurate (0.25 parts) were added. The reactants were stirred under nitrogen for approximately 2 hours. After 2 hours, little or no isocyanate remains. After cooling to 20 °C, a polyester waxy solid is obtained. The product was characterised by size exclusion chromatography relative to polystyrene standards and had Mn=2200 and Mw=2600.

### Intermediate B

2-hydroxyethyl methacrylate (20 parts), ε-caprolactone (168.39 parts), δ-valerolactone (52.31 parts) and hydroquinone (0.14 parts) were stirred under nitrogen at 120°C. Tin (II) chloride (0.02 parts) was added and the reactants were stirred for 18 hours at 120 °C. After cooling to 20 °C the product was obtained as a waxy solid with Mn = 2400 and Mw = 3100 as determined by GPC relative to polycaprolactone standards.
**Comparative Example 1** (CE1) Block copolymer dispersant with conventional acrylate block and an acrylate block with laterally attached conventional tertiary amine from DMAEMA.

N-butyl acrylate (20.00 parts), butyl-2-methyl-2-[(dodecylsulfanylthiocar-bonyl)sulfanyl] propionate (4.20 parts CTA-1 ex Lubrizol), 2,2'-Azobis(2-methylpropionitrile) (0.10 parts) and propylene glycol monomethyl ether acetate (30.00 parts) were stirred under nitrogen at 80 °C. 2,2'-Azobis(2-methylpropionitrile) (0.30 g) and n-butyl acrylate (50.00 g) were charged to the reaction mixture over 4 hours and heated until all the monomer had polymerised as determined by NMR. 2,2'-Azobis(2-methylpropionitrile) (0.30 g) and 2-(dimethylamino)ethyl acrylate (30.00 g) were then charged to the reaction mixture over 5 hours at 80 °C. 2,2'-Azobis(2-methylpropionitrile) (0.10 g) was then added and the reaction mixture heated at 85 °C for 1 hour. The reaction reached 98.5% conversion as determined by NMR analysis and the resulting product had Mn=9000 and Mw=12200 as determined by GPC relative to polystyrene standards. Benzyl chloride (13.26 parts) and propylene glycol monomethyl ether acetate (147 parts) were charged to the reaction mixture over a period of 10 mins and the resulting solution was stirred at 70 °C under nitrogen for a total of 15 hours. The resulting product had a final solids content of 39.0%.
**Comparative Example 2** (CE2) synthesised according to process described in US8268925 B2 of a comb polymer with polycaprolactone teeth and a backbone having laterally attached tertiary amine group from DMAEMA.

Intermediate A (70 parts), dimethylaminoethyl methacrylate (15 parts), methyl methacrylate (15 parts) and butyl mercaptopropionate (1.0 parts) was stirred under nitrogen at 90 °C. 1,1'-azobis(cyclohexanecarbonitrile) (1.0 parts) was added and the reaction mixture was stirred at 90 °C for 9 hours. The resulting product was a waxy solid with Mn=11480 and Mw=30900 as determined by GPC with polystyrene standards.
**Comparative Example 3** (CE3) of a comb polymer dispersant with polyethylene glycol teeth and a polyacrylate backbone with laterally attached tertiary amine groups from DMAEMA.

Polyethylene glycol monomethyl ether methacrylate (34.85 parts, number average molecular weight 500), butyl-3-mercaptopropionate (1.36 parts) and dimethylaminoethyl methacrylate (13.67 parts) was dissolved in butyl acetate (40.00 parts). The reaction mixture was heated to 75 °C then 2,2'-azobis(2-methylpropionitrile) (0.332 parts) and butyl acetate (9.70 parts) were charged to the reaction and heated for 24 hours at 75 °C. NMR indicated that the monomer had polymerised and the butyl acetate solvent was removed from the resulting polymer then it was re-dissolved in water (56.80 parts) to 43.0% solids. The resulting polymer had Mn=5400 and Mw=9240 as determined by GPC relative to polystyrene standards.
**Inventive Example 1** of Block copolymer dispersant with conventional acrylate solubilizing block and acrylate anchoring block with laterally attached tertiary amine from DMANPMA.

Dimethylaminoneopentyl methacrylate (10 parts), butyl-2-methyl-2-[(do-decylsulfanylthiocarbonyl)sulfanyl] propionate (4.20 parts, CTA-1 ex Lubrizol), propylene glycol monomethyl ether acetate (30.00 parts) and 2,2'-Azobis(2-methylpropionitrile) (0.10 parts) were stirred under nitrogen at 80 °C. Dimethylaminoneopentyl methacrylate (20 parts) and 2,2'-Azobis(2-methylpropionitrile) (0.20 parts) were charged to the reaction mixture over 4 hours until the monomer conversion was complete as determined by NMR. N-butyl acrylate (70 parts) and 2,2'-Azobis(2-methylpropionitrile) (0.70 parts) was charged to the reaction mixture over 5 hours. 2,2'-Azobis(2-methylpropionitrile) (0.10 parts) was then added and the reaction mixture heated to 85 °C for 1 hour. The reaction reached 98.0% conversion as determined by NMR analysis and the resulting product had Mn=9000 and Mw=20600 as determined by GPC. The resulting product was diluted with propylene glycol monomethyl ether acetate (147 parts) to 36% solids.
**Inventive Example 2** of Block copolymer dispersant with conventional acrylate solubilizing block and acrylate anchoring block with laterally attached tertiary amine from DMANPMA and aromatic acrylate from BZMA.

N-butyl acrylate (75.1 parts), butyl-2-methyl-2-[(dodecylsulfanylthiocar-bonyl)sulfanyl] propionate (5.88 parts, CTA-1 ex Lubrizol), propylene glycol monomethyl ether acetate (87.56 parts) and 2,2'-Azobis(2-methylpropionitrile) (0.86 parts) were stirred under nitrogen at 75 °C for 90 minutes. N-butyl acrylate (102.51 parts), 2,2'-Azobis(2-methylpropionitrile) (0.35 parts) and propylene glycol monomethyl ether acetate (99.24 parts) were charged to the reaction mixture over 90 minutes until the monomer conversion was complete as determined by NMR. Dimethylaminoneopentyl methacrylate (37.71 parts), benzyl methacrylate (37.6 parts), 2,2'-Azobis(2-methylpropionitrile) (0.35 parts) and propylene glycol monomethyl ether acetate (76.42 parts) were charged to the reaction mixture over 60 minutes. The reaction was stirred for 18 hours. The reaction reached 98.0% monomer conversion as determined by NMR analysis and the resulting product had Mn = 19200 and Mw = 35000 as determined by GPC against polystyrene standards. The resulting product had a solids content of 51% solids.
**Inventive Example 3** of Block copolymer dispersant with conventional acrylate solubilizing block and acrylate anchoring block with laterally attached tertiary amine from isocyanatoethyl methacrylate reacted with 3-(dimethylamino)-2,2-dimethylpropan-1-ol.

N-butyl acrylate (15 parts), butyl-2-methyl-2-[(dodecylsulfanylthiocar-bonyl)sulfanyl] propionate (1.55 parts, CTA-1 ex Lubrizol), propylene glycol monomethyl ether acetate (17.6 parts) and 2,2'-Azobis(2-methylpropionitrile) (0.1 parts) were stirred under nitrogen at 70 °C for 60 minutes. N-butyl acrylate (20 parts), 2,2'-Azobis(2-methylpropionitrile) (0.05 parts) and propylene glycol monomethyl ether acetate (20.05 parts) were charged to the reaction mixture over 25 minutes until the monomer polymerised as determined by NMR. 2-isocyanatoethyl methacrylate (7.5 parts), benzyl methacrylate (7.5 parts), 2,2'-Azobis(2-methylpropionitrile) (0.05 parts) and propylene glycol monomethyl ether acetate (15.05 parts) were charged to the reaction mixture over 15 minutes. The reaction was stirred for 18 hours. The reaction reached 98.0% conversion as determined by NMR analysis and to the resulting product was added 3-(dimethylamino)-2,2-dimethyl propan-1-ol (6.34 parts) and propylene glycol monomethyl ether acetate (5.39 parts). The reaction was stirred at 70 °C for 4 hours until no NCO was present as determined by IR. The resulting product was a pale yellow solution with Mn = 12400 and Mw = 20500 as determined by GPC against polystyrene standards. The resulting product was 55% solids.

A sample was removed (50.43 parts), and to the remaining material (65.75 parts) dimethyl sulfate (3.64 parts) was charged and the reaction mixture was stirred at 25 °C for 18 hours. To the resulting product propylene glycol monomethyl ether acetate (29.85 parts) was added resulting in a yellow solution with 43.6% solids content.
**Inventive Example 4** of Comb copolymer dispersant with conventional polycaprolactone solubilizing teeth and acrylate anchoring block with laterally attached tertiary amine from DMANPMA

A graft copolymer is prepared according to CE2 except dimethylamino neopentyl methacrylate (DMANPMA) replaces dimethylaminoethyl methacrylate (EMAEMA). The resulting product cooled to a waxy solid with Mn = 10100 and Mw = 28800 as determined by GPC.

Polyacrylic acid (6.43 parts, Mn 1800) was charged to a stirred polyether amine (53.6 parts, Surfonamine B200 ex Huntsman) at 50 °C under nitrogen over 10 minutes. The reaction mixture was heated to 70 °C for 2 hrs then heated to 120 °C for 20 hours. Methoxy propyl acetate (60 parts) was charged followed by *N,N*,2,2-tetramethyl-1,2-propane diamine (3.47 parts) and methoxy propyl acetate (3.47 parts). The reaction mixture was heated at 70 °C for 5 hrs, 100 °C for 7 hours and then 120 °C for 8 hours. The resulting product was an amber liquid with solids content = 51.0 %.
**Inventive Example 6** Comb copolymer dispersant with conventional polyethylene oxide) solubilizing teeth and acrylate anchoring block with laterally attached tertiary amine from DMANPMA.

Polyethylene glycol monomethyl ether methacrylate (35.04 parts, Mn=500), butyl-3-mercaptopropionate (1.33 parts) and dimethylaminoneopentyl methacrylate (19.26 parts) were dissolved in butyl acetate (40.07 parts). The reaction mixture was heated to 75 °C then 2,2'-azobis(2-methylpropionitrile) (0.3311 parts) and butyl acetate (9.77 parts) were charged to the reaction and heated for 24 hours at 75 °C. NMR indicated that the monomer had polymerised and the butyl acetate solvent was removed from the resulting polymer then it was re-dissolved in water (56.08 parts) to 46.53% solids. The resulting polymer had Mn =5320 and Mw=11650 as determined by GPC against molecular weight standards.
**Inventive Example** 7 Comb copolymer dispersant with conventional poly(caprolactone) solubilizing teeth and acrylate anchoring block with laterally attached tertiary amine from DMANPMA.

Intermediate B (46.67 parts), dimethylaminoneopentyl methacrylate (16.67 parts), benzyl methacrylate (3.33 parts), butyl 3-mercaptopropionate (2.75 parts) and propylene glycol monomethyl ether acetate (100.59 parts) and 2,2'-azobis(2-methylpropionitrile) (0.23 parts) were stirred under nitrogen at 70 °C for 1 hour. 2,2'-azobis(2-methylpropionitrile) (0.23 parts) and propylene glycol monomethyl ether acetate (3.75 parts) were added and the reaction mixture was stirred for a further hour until the reaction had polymerised as determined by NMR.

Intermediate B (93.33 parts), dimethylaminoneopentyl methacrylate (33.34 parts), benzyl methacrylate (6.67 parts), propylene glycol monomethyl ether acetate (201.18 parts) and 2,2'-azobis(2-methylpropionitrile) (0.46 parts) were added to the reaction mixture over 1 hour. The reaction mixture was heated at 70 °C for 20 hours.

The reaction reached 98% conversion as determined by NMR and the resulting product had Mn = 12600 and Mw = 25200 as determined by GPC. The resulting product was a clear solution with a solids content of 40%.

A sample was removed (121.71 parts), and to the remaining material (387.5 parts) dimethyl sulfate (20.09 parts) and propylene glycol monomethyl ether acetate (23 parts) were added. The reaction mixture was stirred at 50 °C under nitrogen for 21 hours. The resulting product is a pale yellow solution with 42.6% solids content.

### Evaluation of Dispersant Yellowing

Examples 1-7 were weighed into a metal pan so that 1 gram remained after evaporation of solvent. The pans where then placed in an oven at 70-250 °C for 15 minutes or 70 °C for 5 days.

The colour before and after heating was based on the Gardner colour scale from 1-18 where 1= clear film (no colour) and 18 = dark film (highly coloured)

**Table 4, Color Score Before and After Heating**

| Example | Colour score before heating | Oven temp/°C | Time in oven/ minutes | Colour score after heating |
|---|---|---|---|---|
| CE1 | 4 | 250 | 15 | 18 |
| CE2 | 4 | 250 | 15 | 14 |
| CE3 | 4 | 70 | 5 days | 18 |
| EX1 | 4 | 250 | 15 | 8 |
| EX2 | 2 | 230 | 15 | 6 |
| EX3 | 3 | 230 | 15 | 9 |
| EX4 | 3 | 250 | 15 | 5 |
| EX5 | 5 | 170 | 30 | 8 |
| EX6 | 1 | 70 | 5 days | 2 |
| EX7 | 1 | 230 | 15 | 5 |

### Dispersion Testing 1

CE 1 and Example 1 (4.37 parts) and acrylic resin (1.05 parts Macrynal^{®} SM565/70BA ex Allnex) were dissolved in propylene glycol monomethyl ether acetate (23.63 parts). 3mm glass beads (125 parts) and red pigment (5.95 parts Irgazine Red^{®} D3630 ex BASF) were added and the contents milled on a Skandex shaker for 4 hours. The resulting dispersions were fluid and particle size was determine using a Microtrac, Nanotrac^{™}250 particle size analyser. The resulting dispersions (5 parts) were the let down into a solution of hydroxylated resin (3.49 parts Macrynal^{®} SM565/70BA ex Allnex) in propylene glycol monomethyl ether acetate (2.53 parts) with polyisocyanate hardener (2.53 parts, Desmodur^{®} N3390 ex Bayer). The resulting coatings exhibited high gloss as determined with a Byk Gardner Haze-gloss meter.

**Table 5, Particle Size, Gloss, & Haze**

| Example | PS D50/nm | PS D90/nm | Gloss 20° | Gloss °60 | Haze |
|---|---|---|---|---|---|
| CE1 | 620 | 980 | 74 | 95 | 168 |
| EX1 | 489 | 717 | 77 | 90 | 100 |

### Dispersion Testing 2

EX2 (58.37 parts) was dissolved in propylene glycol monomethyl ether acetate (61.63 parts). 1mm glass beads (190 parts) and red pigment (30.0 parts Irgazin Red^{®} D3630 ex BASF) were added and the contents milled on a Dispermat^{®} F1 mill for 1 hour at 2500 rpm. The resulting dispersion (110 parts) was filtered to remove the glass beads then diluted with propylene glycol monomethyl ether acetate (36.7 parts) and 0.1 mm zirconium beads added (70 parts). The contents were milled on a WAB Dyno^{®} Research Mill for 30 minutes at 3000 rpm. The resulting viscosity was less than 0.3 Pa.S at 10 s⁻¹ as determined using a TA Instruments rheometer and the particle size of the dispersion was D50=183 nm and D90=470 nm with Z Ave=157 nm determined by Malvern Zetasizer Nano-S90.

### Dispersion Testing 3

CE 2 and Example 4 or 5 (1.9 parts based on 100% active) and acrylic resin (1.05 parts Macrynal^{®} SM565/70BA ex Allnex) were dissolved in propylene glycol monomethyl ether acetate (23.3 parts). 3mm glass beads (125 parts) and blue pigment (8.75 parts Heliogen Blue^{®} L6700F ex BASF) were added and the contents milled on a Skandex shaker for 4 hours. The resulting dispersions (29.17 parts) were then let down into a solution of hydroxylated resin (36.45 parts Macrynal^{®} SM565/70BA ex Allnex) in propylene glycol monomethyl ether acetate (41.98 parts) with polyisocyanate hardener (3.24 parts, Desmodur^{®} N3390 ex Bayer). The resulting coatings exhibited high gloss.

**Table 6, More Particle Sizes, Gloss, and Haze**

| Example | Particle Size D50/nm | Particle Size D90/nm | **20° Gloss** | **60° Gloss** | **Haze value** |
|---|---|---|---|---|---|
| CE2 | 458 | 566 | 59.1 | 85.7 | 259 |
| EX4 | 368 | 635 | 58.7 | 83.1 | 233 |
| EX5 | 476 | 880 | 49 | 85 | 277 |

### Dispersion testing 4

CE3 and Example 6 (0.5 parts based on 100% active) were dissolved in water (7.5 parts). 3mm glass beads and blue pigment (2 parts Heliogen^{®} Blue L6700F ex BASF) were added and the contents milled on a horizontal shaker for 16 hrs. The viscosity of the resulting mill bases was determined by the freedom of the glass beads to move throughout the mill base. With CE3 the resulting mill base gelled whereas with example 6 the resulting mill base exhibited excellent fluidity.

Example 3 and example 7 (0.6 parts based on 100% active) were dissolved in propylene glycol monomethyl ether acetate. 3 mm glass beads (17 parts) and red pigment (1.5 parts Irgazin red^{®} L3630 ex BASF) were added and the contents were milled on a horizontal shaker for 16 hours. The viscosity of the resulting mill bases was determined by the freedom of the glass beads to move throughout the mill base. The resulting mill bases exhibited excellent fluidity.

EXAMPLE 8 , Butyl methacrylate (43.75 parts), methyl methacrylate (43.75 parts), butyl-2-methyl-2-[(dodecylsulfanylthiocarbonyl)sulfanyl] propionate (8.82 parts, CTA-1 ex Lubrizol), propylene glycol monomethyl ether acetate (85.25 parts) were stirred under nitrogen at 75 °C for 30 minutes. 2,2'-Azobis(2-methylpropionitrile) (0.29 parts) dissolved in propylene glycol monomethyl ether acetate (5.0 parts) was instantaneously charged to the reaction mixture and the contents stirred for a further 60 minutes at 75 °C. 2,2'-Azobis(2-methylpropionitrile) in (0.29 parts) in propylene glycol monomethyl ether acetate (5.0 parts) was again instantaneously charged to the reaction mixture and the contents stirred for a further 105 minutes at 75 °C. Butyl methacrylate (43.75 parts), methyl methacrylate (43.75 parts) was then charged to the reaction mixture over 70 minutes concurrently charging 2,2'-Azobis(2-methylpropionitrile) (0.29 parts) dissolved in propylene glycol monomethyl ether acetate (89.69 parts). The contents were heated at 75 °C for 55 minutes until monomer conversion was complete as determine by NMR. Dimethylamino neopentyl methacrylate (75 parts) was charged over 55 minutes at 75 °C concurrently charging 2,2'-Azobis(2-methylpropionitrile) (0.29 parts) dissolved in propylene glycol monomethyl ether acetate (35 parts). An additional feed of 2,2'-Azobis(2-methylpropionitrile) (0.25 parts) dissolved in propylene glycol monomethyl ether acetate (40.29 parts) was then charged to the reaction mixture over 55 minutes. The reaction was stirred under nitrogen at 75 °C for 18 hrs until monomer conversion was complete as determined by NMR. The resulting product was a pale yellow solution with Mn = 12800 and Mw=18860 as determined by GPC against polystyrene standards. The resulting product has a solids content of 49.6% with an amine value of 41.3 mg KOH/g.

Example 9-11 are repeats of Example 8 except the ratio of monomers, initiator and RAFT agent have been altered to vary either the molecular weight or amine value of the dispersant

**Table 7, Recipes for Examples 9, 10, and 11**

| Component | EX 9 | EX10 | EX11 |
|---|---|---|---|
| Propylene glycol monomethyl ether acetate | 256.84 | 263.22 | 337.18 |
| Butyl methacrylate | 70 | 70 | 70 |
| Methyl methacrylate | 70 | 70 | 70 |
| Dimethylamino neopentyl methacrylate | 110 | 110 | 190 |
| butyl-2-methyl-2-[(dodecylsulfanylthiocar-bonyl)sulfanyl] propionate | 5.64 | 11.28 | 5.64 |
| 2,2'-azobis(2-methylpropionitrile) | 1.2 | 1.92 | 1.55 |
| Experimental amine value / mg KOH/g as determined by titration | 63 | 62 | 85 |
| Mn as determined by GPC | 11200 | 9100 | 18000 |
| Mw as determined by GPC | 18600 | 14200 | 31200 |
| Solids as determined by gravimetry | 50% | 49.9% | 52.2% |

Example 12, Example 12 is a repeat of Example 9 except the polymer has been quaternized with diethyl sulfate. The molecular weight before quaternisation was Mn = 14200 and Mw=21500 as determined by GPC against polystyrene standards. The product had a solids content of 49.18% and amine value 66.6 mgKOH/g. This product (400 parts) was cooled to 50 °C and ethylene glycol butyl ether (119.24 parts) and diethyl sulfate (18.28 parts) were added. The reaction mixture was stirred under nitrogen for 18 hrs at 50 °C. The resulting dispersant was a pale yellow solution with a solids content of 39.32% and amine value 44.36 mgKOH/g as determined by titration.

Example 13, Example 13 is a repeat of Example 9 except the polymer is quaternised with diethyl sulfate. The molecular weight before quaternisation was Mn = 14200 and Mw=21500 as determined by GPC against polystyrene standards. The resulting product had a solids content of 49.18% and amine value 66.6 mgKOH/g. This product (400 parts) was cooled to 50 °C and diethyl sulfate (36.6 parts) and ethylene glycol butyl ether (146.68 parts) were added and the reaction mixture stirred under nitrogen at 50 °C for 18 hrs. The resulting dispersant was a pale yellow solution with a solids content of 40.75% and amine value 25 mgKOH/g as determined by titration.

Example 14, Butyl methacrylate (60 parts), butyl-2-methyl-2-[(dodecyl-sulfanylthiocarbonyl)sulfanyl] propionate (4.08 parts, CTA-1 ex Lubrizol), propylene glycol monomethyl ether acetate (108.11 parts) were stirred under nitrogen at 80 °C for 30 minutes. 2,2'-Azobis(2-methylpropionitrile) (0.13 parts) was dissolved in propylene glycol monomethyl ether acetate (5 parts) and instantaneously charged to the reaction mixture and stirred under nitrogen for at 80 °C for 60 minutes. A further addition of 2,2'-Azobis(2-methylpropionitrile) (0.13 parts) was dissolved in in propylene glycol monomethyl ether acetate (5.0 parts) and instantaneously charged to the reaction mixture then the contents stirred for 60 minutes at 80 °C. Butyl methacrylate (62.5 parts), was then charged to the reaction mixture over 60 minute, concurrently charging 2,2'-Azobis(2-methylpropionitrile) (0.27 parts) in propylene glycol monomethyl ether acetate (9.0 parts). The contents were stirred for a further 20 hours at 80 °C until monomer conversion was complete as determined by NMR. Propylene glycol monomethyl ether acetate (82.99 parts) was charged to the reaction vessel and then dimethylamino neopentyl methacrylate (96.25 parts) was charged over 60 minutes at 80 °C concurrently charging 2,2'-Azobis(2-methylpropionitrile) (0.41 parts) dissolved in propylene glycol monomethyl ether acetate (13.67 parts). The reaction mixture was stirred under nitrogen at 80 °C for 18 hrs until monomer conversion was complete as determined by NMR. A sample was removed from the reaction mixture and had Mn = 19600 and Mw=29900 as determined by GPC against polystyrene standards. The resulting sample had a solids content of 49.4% and amine value 62.13 mgKOH/g. The remaining reaction mixture (400 parts) was cooled to room temperature and dimethyl sulfate (13.96 parts) and ethylene glycol butyl ether (114.96 parts) were added and the reaction mixture stirred under nitrogen at 25 °C for 18 hrs. The resulting product was a pale yellow solution with a solids content of 39.5% and amine value 35 mgKOH/g as determined by titration.

Example 15, Intermediate B (250 parts), dimethylaminoneopentyl methacrylate (225 parts), benzyl methacrylate (25 parts), butyl 3-mercaptopropionate (9.92 parts) and propylene glycol monomethyl ether acetate (493.17 parts) were stirred under nitrogen at 80 °C. 2,2'-azobis(2-methylpropionitrile) (3.35 parts) was dissolved in propylene glycol monomethyl ether acetate (40 parts) and added to the reaction mixture over 120 minutes. The reaction was heated for a further 18 hrs at 80 °C until monomer conversion was complete as determined by NMR. The resulting product had Mn= 7500, Mw=19300 as determined by GPC. The resulting product was a pale yellow solution 48.7 % solids with amine value 60.50 mg KOH/g as determined by titration.

This product (400 parts) was cooled to 50 °C and diethyl sulfate (33.24 parts) and ethylene glycol butyl ether (136.88 parts) were added and the reaction mixture stirred under nitrogen at 50 °C for 18 hrs. The resulting dispersant was a pale yellow solution with a solids content of 53.45 % and amine value 34.50 mgKOH/g as determined by titration.

Example 16, Intermediate B (350 parts), dimethylaminoneopentyl methacrylate (62.5 parts), benzyl methacrylate (87.5 parts), butyl 3-mercaptopropionate (7.17 parts) and propylene glycol monomethyl ether acetate (495.07 parts) were stirred under nitrogen at 80 °C. 2,2'-azobis(2-methylpropionitrile) (2.42 parts) was dissolved in propylene glycol monomethyl ether acetate (14.52 parts) and added to the reaction mixture over 120 minutes. The reaction was heated for a further 18 hrs at 80 °C until the monomer conversion was complete as determined by NMR. The resulting product had Mn=10800, Mw=28600 as determined by GPC. The resulting product was a clear solution 49.2 % solids with amine value 17.04 mg KOH/g as determined by titration.

Example 17, Example 16 (400 parts) was cooled to 50 °C and diethyl sulfate (63.18 parts) and ethylene glycol butyl ether (186.76 parts) were added and the reaction mixture stirred under nitrogen at 50 °C for 18 hrs. The resulting dispersant was a pale yellow solution with a solids content of 40.21 % and amine value 1.35 mgKOH/g as determined by titration.

### Yellowing data and dispersion data

Examples 8-17 were weighed into a metal pan so that 1 gram remained after evaporation of solvent. The pans where then placed in an oven at 230 °C for 15 minutes. The colour before and after heating was based on the Gardner colour scale from 1-18 where 1= clear film (no colour) and 18 = dark film (highly coloured)

**Table 8, Color Scores after Heat Aging for Examples 8-17**

| Example | Colour score before heating | Oven temp/°C | Time in oven/ minutes | Colour score after heating |
|---|---|---|---|---|
| 8 | 4 | 230 | 15 | 6 |
| 9 | 4 | 230 | 15 | 6 |
| 10 | 4 | 230 | 15 | 6 |
| 11 | 3 | 230 | 15 | 5 |
| 12 | 4 | 230 | 15 | 8 |
| 13 | 4 | 230 | 15 | 8 |
| 14 | 4 | 230 | 15 | 7 |
| 15 | 1 | 230 | 15 | 4 |
| 16 | 1 | 230 | 15 | 1 |
| 17 | 1 | 230 | 15 | 4 |

### Dispersion Testing 5

Examples 8-17 (2.0 parts based on 50% active) were dissolved in propylene glycol monomethyl ether acetate (7.0 parts). 1mm glass beads (17 parts) and Pigment Green 58 (1.0 parts, Fastogen^{®} Green A110 ex DIC) were added and the contents milled on a horizontal shaker for a total of 48hrs (3 x 16 hr millings). The viscosity of the resulting mill bases was determined by the freedom of the glass beads to move throughout the mill base and all the mill bases exhibited excellent fluidity. The particle size of the millbase was determine using a Microtrac, Nanotrac^{™}250 particle size analyser. All millbases had a particle size average D50 less than 200 nm.

**Table 9, Particle Size of Examples 8-17**

| Example | Particle Size of millbase D50/nm | Particle Size of millbase D90/nm |
|---|---|---|
| EX8 | 175 | 233 |
| EX9 | 187 | 257 |
| EX10 | 178 | 270 |
| EX11 | 174 | 306 |
| EX12 | 110 | 166 |
| EX13 | 92 | 149 |
| EX14 | 98 | 178 |
| EX15 | 109 | 168 |
| EX16 | 191 | 258 |
| EX17 | 78 | 152 |

Except in the Examples, or where otherwise explicitly indicated, all numerical quantities in this description specifying amounts of materials, reaction conditions, molecular weights, number of carbon atoms, and the like, are to be understood as modified by the word "about". It is to be understood that the upper and lower amount, range, and ratio limits set forth herein may be independently combined. Similarly, the ranges and amounts for each element of the invention can be used together with ranges or amounts for any of the other elements.

As used herein, the transitional term "comprising", which is synonymous with "including", "containing," or "characterized by", is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the basic and novel characteristics of the composition or method under consideration.

## Claims

1. A polymeric dispersant comprising an olefinic backbone of formula 1 derived from polymerizing alpha-beta unsaturated olefinic monomers and said monomers having pendant groups selected from A, B, C, and D or being post polymerization functionalized to have said pendant groups A, B, C, and D; said dispersant being a random or blocky copolymer having repeat units below in random or blocky order, 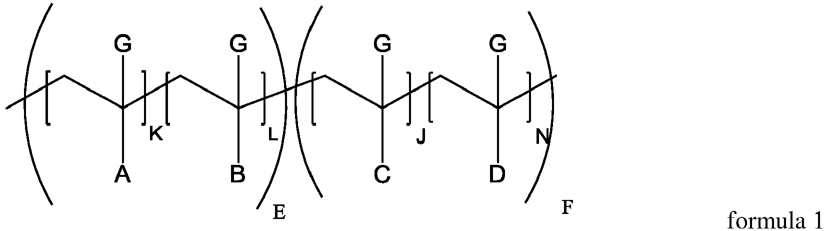
wherein K, E, and F are at least 1; L, J, and N can individually be zero but J and N cannot both be zero in the same dispersant of formula 1;
wherein said K, L, J, N, E, and F are non-negative integers and the values of K, L, J, N, E, and F are such that the dispersant has a number average molecular weight from 2000 to 60,000 g/mole; wherein G is a CH₃ or H group; wherein:
A is a moiety comprising a tertiary or quaternized aliphatic amine and a connecting group comprising a hydrocarbylene, wherein hydrocarbylene refers to a divalent hydrocarbon type group preferably formed with the removal of two hydrogens from a hydrocarbon group of 5 to 30 carbon atoms and optionally comprising up to 3, 4, or 5 oxygen atoms, up to 1 or 2 sulfur atoms, and/or up to 3, 4, or 5 nitrogen atoms in ether, ester, sulfur, and amide type linkages, and wherein A is preferably selected from the structures of formulae 2 to 9 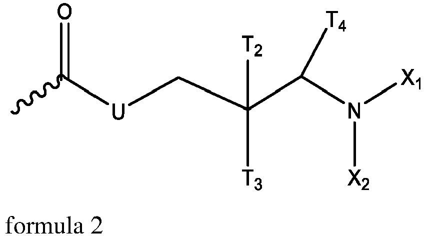 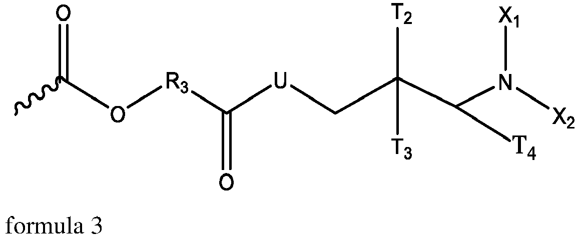 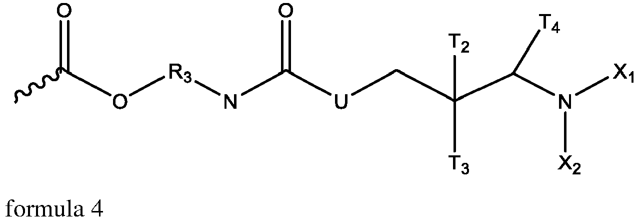 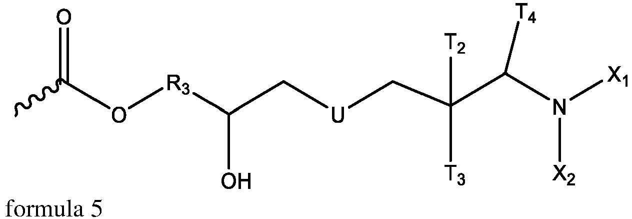 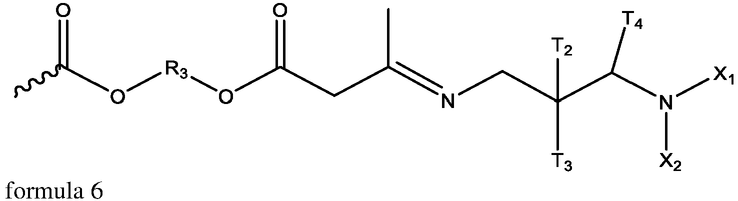 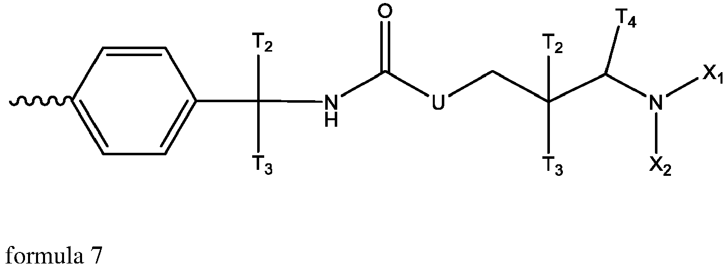 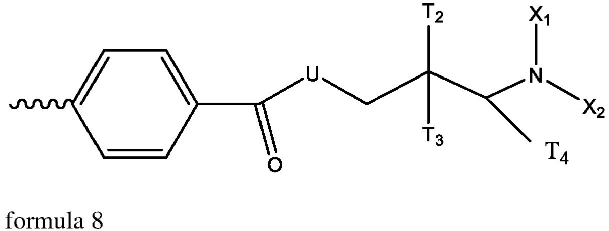 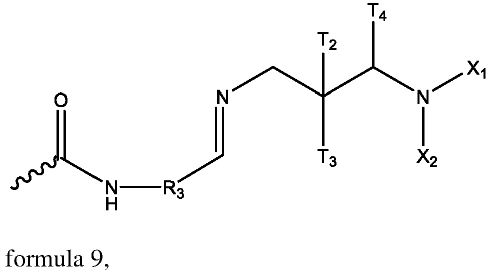 wherein
U comprises a functional nitrogen, oxygen or sulfur, typically oxygen or nitrogen and U, when said U comprises nitrogen, further comprises a pendant H, C₁₋₆ alkyl, or C₂₋₆ acyl group,
R₃ is independently an alkylene or hydrocarbylene group that may be linear or branched having a carbon number of 1-25, wherein when R₃ is a hydrocarbylene group it may contain oxygen or nitrogen atoms in an amount of up to one nitrogen or oxygen for every 3 carbon atoms,
T₂ and T₃ are each independently alkyl preferably methyl, ethyl or propyl, hydroxy C₁-C₃-alkylene preferably -CH₂OH, aryl preferably benzyl or phenyl, or the group -CH(T₄) -N(X₁) (X₂),
T₄ is H, or optionally substituted aryl preferably benzyl, phenyl or cinnamyl where the substituent is C₁-C₄-alkoxy, hydroxyl, C₁-C₄-alkyl, optionally halogen, optionally C₁-C₄-alkyl substituted with heteroatoms,
X₁ and X₂ are each independently alkyl, substituted alkyl, aralkyl or alkaryl groups; alkyl groups are preferred especially methyl groups; or X₁, X₂, and the nitrogen atom together can form a substituted or non-substituted ring structure of five or six atoms, optionally having aromaticity, preferably where X₁, X₂, and the nitrogen atom form pyridine, morpholine, or imidazole,
the nitrogen atom X₁-N-X₂ may be partly or fully quaternised; and/or partially or fully neutralized;
B is the remainder of acrylic monomer or mixtures of monomers after incorporating the two carbons and any G group of the carbon-to-carbon double bond of the acrylic type monomer into the backbone, i.e. it is the COOH of acrylic acid, the COO-alkyl of alkyl acrylates,
C is a moiety derived from an acrylic monomer or mixtures of monomer(s), preferably (meth)acrylic acids, salts of (meth)acrylic acids, amides of (meth)acrylic acids; alkyl (meth) acrylates; acids, salts, and amides of ethylenically unsaturated diacids, preferably of itaconic acid or maleic acid,
wherein B and C preferably have the formula 10, 11 or 12 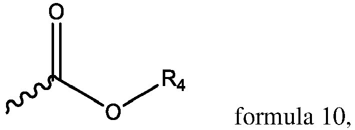 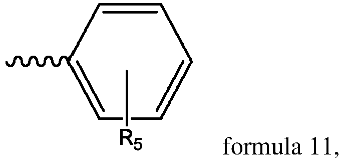 or 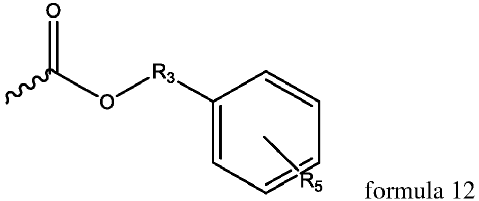
wherein R₄ is a linear or branched alkyl group having a carbon number of 1-25, and R₅ is H, -CH₃ or linear or branched alkyl groups having carbon number of 1-25; and
D comprises a polymeric segment of 300 to 5000 g/mole molecular weight characterized as a solvent solubilizing polymeric segment wherein said polymeric segment is selected from a polyacrylate, polyester, polyether, or copolymer of polyether and polyester, wherein the variable 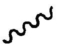 indicates the carbon-carbon bond between the olefinic backbone of formula 1 and the pendant groups A, B, or C, the 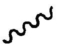 is not considered to be part of formulas of pendant groups A, B, or C, but rather indicates where the formulas connect to the backbone of formula 1,
wherein said dispersant has at least one backbone repeat unit or at least one polymeric backbone block having the formula 25 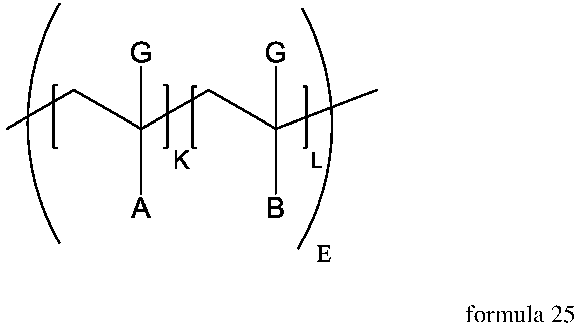
wherein E is the average total number of such repeat units in a random or blocky polymeric dispersant, and formula 25 is characterized as being a particulate anchoring repeat unit or block that has chemically attached thereto said tertiary amine or quaternized tertiary amine group A, said formula 25 being from 10 to 60 wt. % of said dispersant based on the weight of said dispersant; and at least one repeat unit or at least one polymeric backbone block having the formula 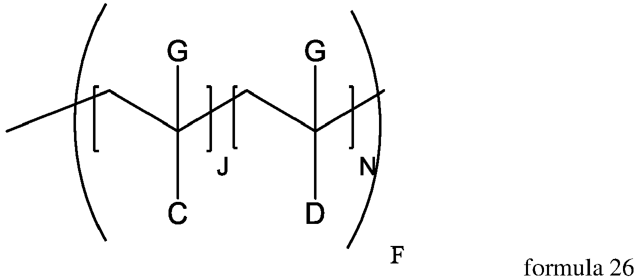
wherein F is the sum of average repeat units in random or blocky order in said polymeric dispersant, said formula 26 being characterized as a solvent solubilizing block of said dispersant and being from 40 to 90 wt. % of said dispersant;
said formula 26 being a polymeric segment of 300 to 5000 g/mole molecular weight or containing D which can be a polymeric segment of 300 to 5000 g/mole molecular weight characterized as a solvent solubilizing polymeric segment.

2. The polymeric dispersant according to claim 1, wherein said polymeric dispersant is described as a block copolymer with formula 25 being a particulate anchoring block, being in the form of 1 or 2 blocks in the dispersant and formula 26, being a solvent solubilizing block, being present in the form of 1 or 2 blocks.

3. The polymeric dispersant according to any of the previous claims, wherein N is zero and the solvent solubilizing block(s) of formula 26 is formed from the monomer precursor to the repeat unit with a pendant C group and J is an integer large enough that the solubilizing chain has a number average molecular weight from 300 to 5000 g/mole.

4. The polymeric dispersant according to any of claims 1 or 2, wherein N is at least 1 and F is at least one.

5. The polymeric dispersant according to any of claims 1, 2 or 4, wherein D is selected from formulas 17 to 24 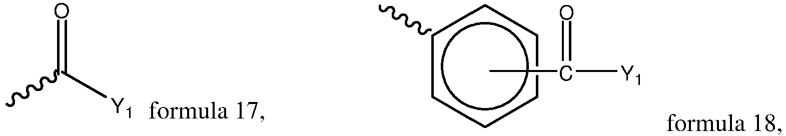 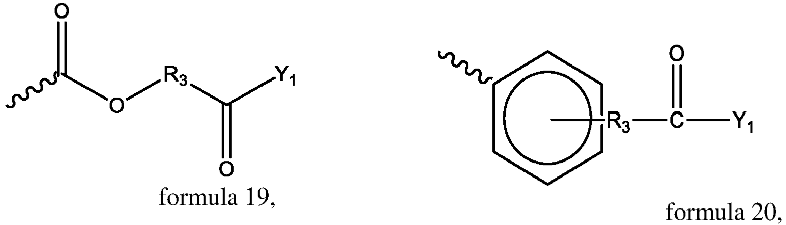 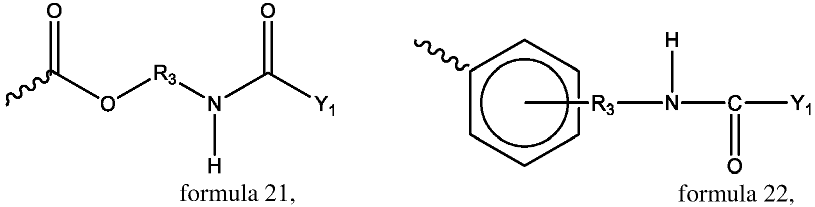 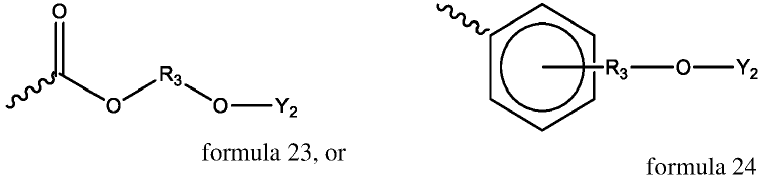
and Y₁ and Y₂ are selected from a polyether homopolymer or copolymer, a polyester from a lactone and/or hydroxycarboxylic acid containing 2 to 26 carbon atoms, a polyether-co-polyester, a polyacrylate, or mixtures thereof;
wherein the variable 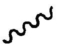 indicates the carbon-carbon bond between the olefinic back-bone of formula 1 and the pendant group D, the 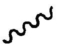 is not considered to be part of formulas of pendant group D but rather indicates where the formulas connect to the backbone of formula 1.

6. The polymeric dispersant according to any of claims 1, 2, 4, or 5, wherein D comprises 300 to 5000 g/mole number average molecular weight poly(alkylene oxide) and the product of F times N is from 1 to 50.

7. The polymeric dispersant according to any of claims 1, 2, 4, 5, or 6, wherein D comprises a 500 to 3000 g/mole number average molecular weight poly(alkylene oxide), F times N is from 3 to 50, and said poly(alkylene oxide) comprises from 50 to 70 weight % of said dispersant.

8. The polymeric dispersant according to any of claims 1, 2, 4, 5, or 6, wherein D comprises a 300-5000 g/mole number average molecular weight polyester solvent solubilizing chain and the product of F times N is from 1 to 50, preferably wherein D comprises a 500 to 3000 g/mole number average molecular weight polyester derived from homo or co-polymerizing hydroxycarboxlic acids or lactones from said hydroxycarboxylic acid having 2 to 18 carbon atoms, the product of F times N is from 3 to 50, and wherein 50 to 70 wt. % of said dispersant is said polyester.

9. The polymeric dispersant according to any of claims 1, 2, 4, 5, or 6, wherein D comprises a 300 to 5000 g/mole number average molecular weight polyolefin or polyacrylate and wherein the product of F times N is from 1 to 50, preferably wherein D comprises a 500 to 3000 g/mole number average molecular weight polyolefin or polyacrylate and wherein the product of F times N is from 3 to 50.

10. The polymeric dispersant according to any of the previous claims, wherein the product of K times E is from 2 to 25.

11. The polymeric dispersant of any of the preceding claims, wherein A is 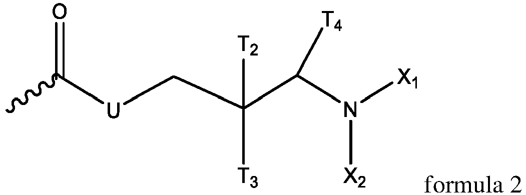
and U comprises oxygen or nitrogen and U, when said U comprises nitrogen, further comprises a pendant H, C₁₋₆ alkyl, or C₂₋₆ acyl group, or
wherein A is 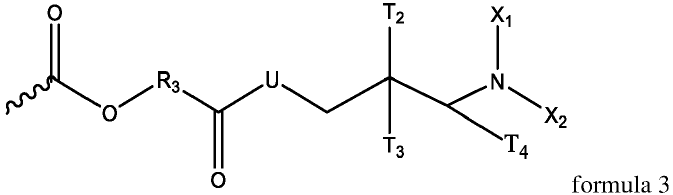
and U comprises oxygen or nitrogen and U, when said U comprises nitrogen, further comprising a pendant H, C₁₋₆ alkyl, or C₂₋₆ acyl group, or
wherein A is 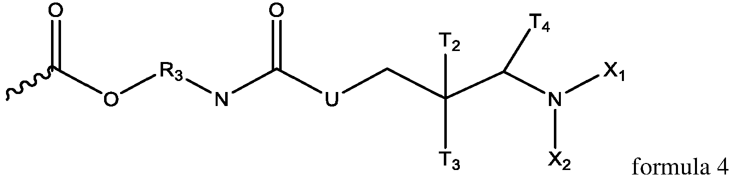
and U comprises oxygen or nitrogen and U, when said U comprises nitrogen, further comprises a pendant H, C₁₋₆ alkyl, or C₂₋₆ acyl group, or
wherein A is 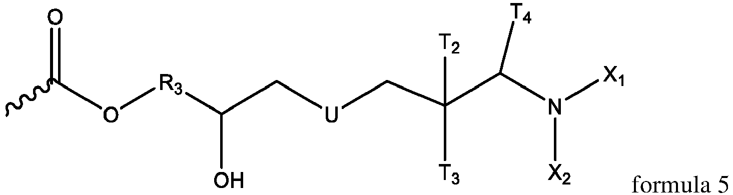
and U comprises oxygen or nitrogen and U, when said U comprises nitrogen, further comprises a pendant H, C₁₋₆ alkyl, or C₂₋₆ acyl group, or
wherein A is 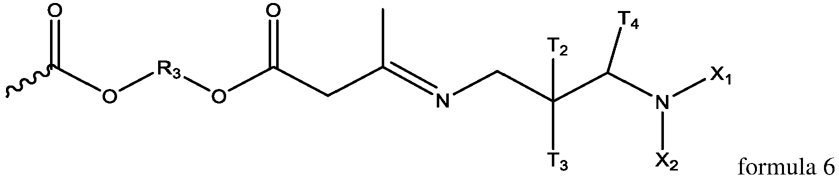
and U comprises oxygen or nitrogen and U, when said U comprises nitrogen, further-comprises a pendant H, C₁₋₆ alkyl, or C₂₋₆ acyl group, or
wherein A is 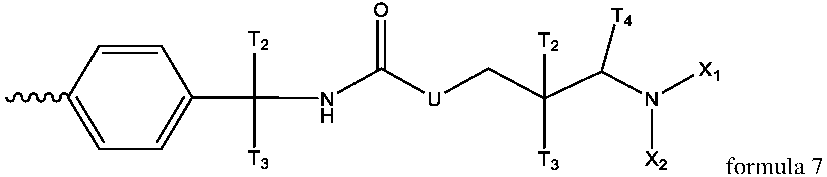
and U comprises oxygen or nitrogen and U, when said U comprises nitrogen, further comprises a pendant H, C₁₋₆ alkyl, or C₂₋₆ acyl group, or
wherein A is 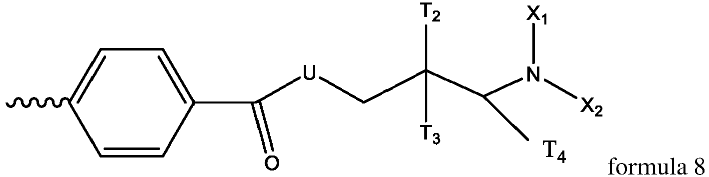
and U comprises oxygen or nitrogen and U, when said U comprises nitrogen, further comprises a pendant H, C₁₋₆ alkyl, or C₂₋₆ acyl group, or
wherein A is 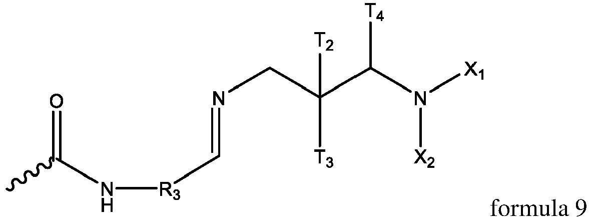
wherein R₃, T₂, T₃, T₄, X₁ and X₂ are as defined in claim 1.

12. The composition comprising a particulate in dispersed form, a continuous media, and a polymeric dispersant any of claims 1 to 11; wherein said particulate interacts preferentially with said anchoring block(s) of formula 23, and said continuous media comprising water, a polar organic medium, or a non-polar organic medium interacts preferentially with said solubilizing block(s) of formula 24.

13. The composition of claim 12, wherein the composition is a millbase, paint or ink.

14. The composition of claim 12 or 13, wherein the polymeric dispersant is present in an amount ranging from 0.5 wt. % to 30 wt. %, or 1 wt. % to 25 wt. % of the composition.

## Patentansprüche

1. Polymerdispergiermittel, umfassend ein olefinisches Rückgrat von Formel 1, das aus polymerisierenden Alpha-Beta ungesättigten olefinischen Monomeren abgeleitet ist, und wobei die Monomere Seitengruppen aufweisen, die aus A, B, C und D ausgewählt sind, oder nach Polymerisation funktionalisiert sind, um die Seitengruppen A, B, C und D aufzuweisen; wobei das Dispergiermittel ein zufälliges oder blockartiges Copolymer ist, das Wiederholungseinheiten in zufälliger oder blockiger Reihenfolge unten aufweist, 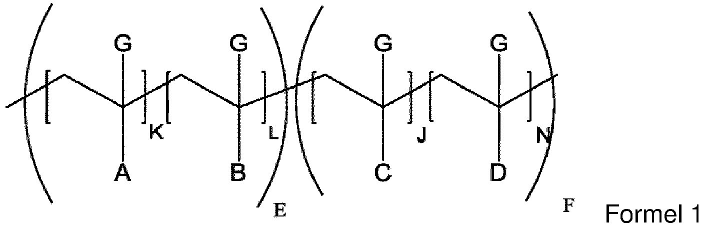
wobei K, E und F mindestens 1 sind; L, J und N einzeln null sein können, aber J und N in dem gleichen Dispergiermittel von Formel 1 nicht beide null sein können;
wobei das K, L, J, N, E und F nicht negative ganze Zahlen sind, und die Werte von K, L, J, N, E und F derart sind, dass das Dispergiermittel eine zahlenmittlere Molmasse von 2000 bis 60.000 g/mol aufweist; wobei G eine CH₃- oder H-Gruppe ist; wobei:
A ein Molekülteil ist, umfassend ein tertiäres oder quaternisiertes aliphatisches Amin und eine verbindende Gruppe, umfassend ein Hydrocarbylen, wobei sich Hydrocarbylen auf eine zweiwertige kohlenwasserstoffartige Gruppe bezieht, die vorzugsweise mit der Entfernung von zwei Wasserstoffen aus einer Kohlenwasserstoffgruppe mit 5 bis 30 Kohlenstoffatomen gebildet wird und optional umfassend bis zu 3, 4 oder 5 Sauerstoffatome, bis zu 1 oder 2 Schwefelatome und/oder bis zu 3, 4 oder 5 Stickstoffatome in ether-, ester-, schwefel- und amidartigen Bindungen, und wobei A vorzugsweise aus den Strukturen der Formeln 2 bis 9 ausgewählt ist. 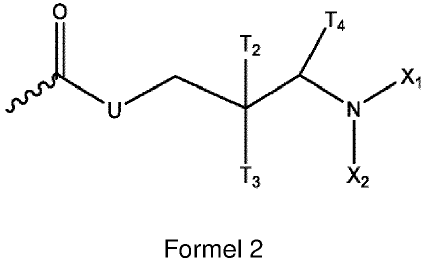 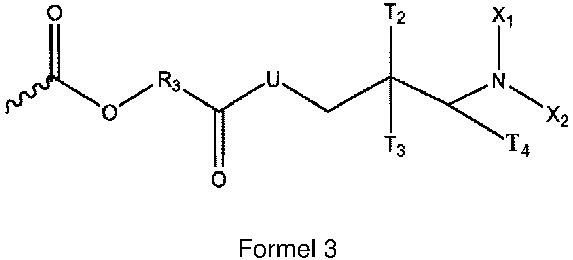 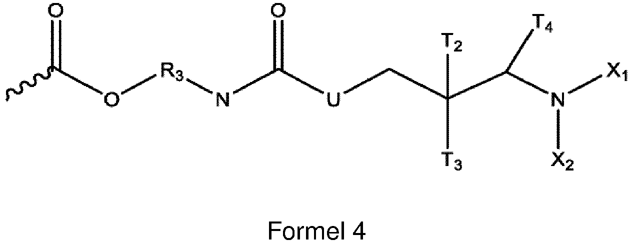 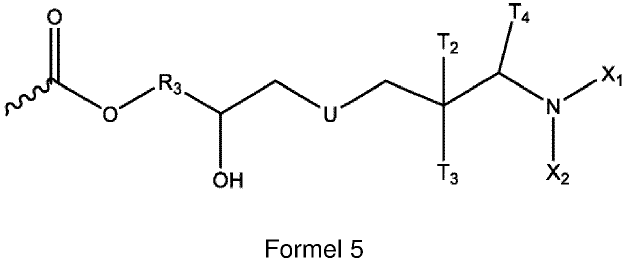 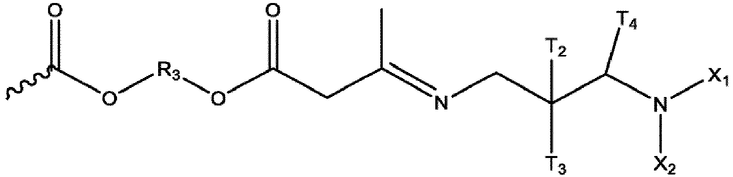 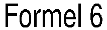 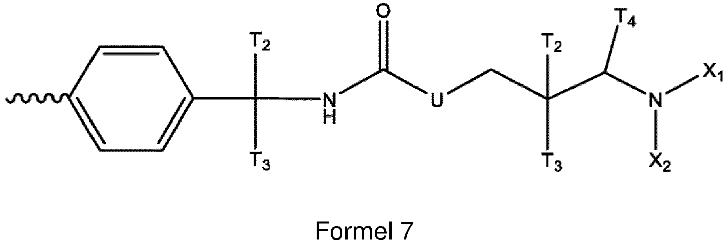 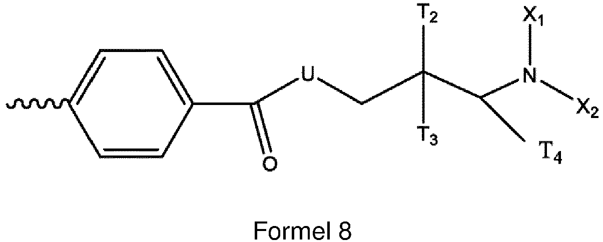 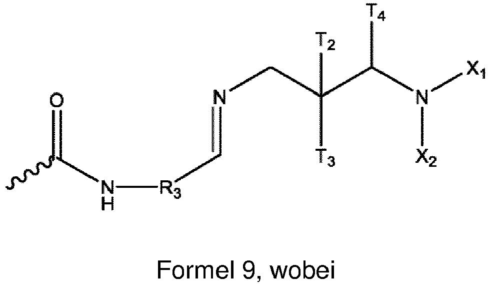
U einen funktionellen Stickstoff, Sauerstoff oder Schwefel, typischerweise Sauerstoff oder Stickstoff umfasst, und U, wenn das U Stickstoff umfasst, ferner eine seitenständige H-, C₁₋₆-Alkyl- oder C₂₋₆-Acylgruppe umfasst,
R₃ unabhängig eine Alkylen- oder Hydrocarbylengruppe ist, die linear oder verzweigt sein kann, die eine Kohlenstoffzahl von 1-25 aufweist, wobei, wenn R₃ eine Hydrocarbylengruppe ist, sie Sauerstoff- oder Stickstoffatome in einer Menge von bis zu einem Stickstoff oder Sauerstoff für alle 3 Kohlenstoffatome enthalten könnte,
T₂ und T₃ unabhängig voneinander Alkyl, vorzugsweise Methyl, Ethyl oder Propyl, Hydroxy-C₁-C₃-Alkylen, vorzugsweise -CH₂OH, Aryl, bevorzugt Benzyl oder Phenyl oder die Gruppe -CH(T₄) -N(X₁)(X₂) sind,
T₄ H oder optional substituiertes Aryl, vorzugsweise Benzyl, Phenyl oder Cinnamyl ist, wobei der Substituent C₁-C₄-Alkoxy, Hydroxyl, C₁-C₄-Alkyl, optional Halogen, optional C₁-C₄-Alkyl, substituiert mit Heteroatomen ist,
X₁ und X₂ unabhängig voneinander Alkyl-, substituierte Alkyl-, Aralkyl- oder Alkarylgruppen sind; wobei Alkylgruppen, insbesondere Methylgruppen, bevorzugt werden; oder X₁, X₂ und das Stickstoffatom zusammen eine substituierte oder nicht substituierte Ringstruktur mit fünf oder sechs Atomen bilden können, die optional Aromatizität aufweist, vorzugsweise wobei X₁, X₂ und das Stickstoffatom Pyridin, Morpholin oder Imidazol bilden,
wobei das Stickstoffatom X₁-N-X₂ teilweise oder vollständig quaternisiert sein könnte; und/oder teilweise oder vollständig neutralisiert sein könnte;
wobei B der Rest von Acrylmonomer oder Mischungen von Monomeren nach einem Einbau der beiden Kohlenstoffatome und einer beliebigen G-Gruppe der Kohlenstoff-Kohlenstoff-Doppelbindung des acrylartigen Monomers in das Rückgrat ist, d. h. es ist das COOH der Acrylsäure, das COO-Alkyl von Alkylacrylaten,
C ein Molekülteil ist, der abgeleitet ist von einem Acrylmonomer oder Mischungen von Monomer(en), vorzugsweise (Meth)acrylsäuren, Salzen von (Meth)acrylsäuren, Amiden von (Meth)acrylsäuren; Alkyl(meth)acrylaten; Säuren, Salzen und Amiden von ethylenisch ungesättigten zweiwertigen Säuren, vorzugsweise von Itaconsäure oder Maleinsäure,
wobei B und C vorzugsweise die Formel 10, 11 oder 12 aufweisen 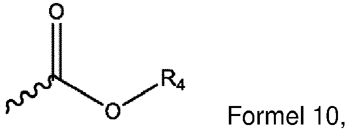 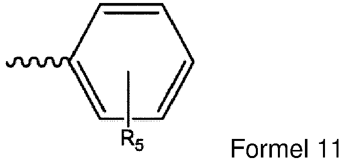 oder 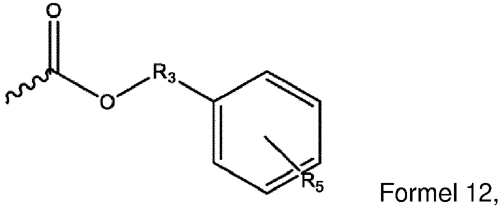
wobei R₄ eine lineare oder verzweigte Alkylgruppe ist, die eine Kohlenstoffzahl von 1-25 aufweist, und R₅ H, -CHs oder lineare oder verzweigte Alkylgruppen sind, die eine Kohlenstoffzahl von 1-25 aufweisen; und
D ein Polymersegment von 300 bis 5000 g/mol Molmasse umfasst, **gekennzeichnet als** ein lösungsmittelsolublisierendes Polymersegment, wobei das Polymersegment aus einem Polyacrylat, einem Polyester, einem Polyether oder einem Copolymer von Polyether und Polyester ausgewählt ist, wobei die variable 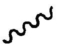 die Kohlenstoff-Kohlenstoff-Bindung zwischen dem olefinischen Rückgrat von Formel 1 und den Seitengruppen A, B oder C angibt, wobei die 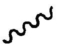 nicht als Teil der Formeln der Seitengruppen A, B oder C betrachtet wird, sondern angibt, wo die Formeln mit dem Rückgrat von Formel 1 verbunden sind,
wobei das Dispergiermittel mindestens eine Rückgratwiederholungseinheit oder mindestens einen Polymerrückgratblock aufweist, der/die die Formel 25 aufweist 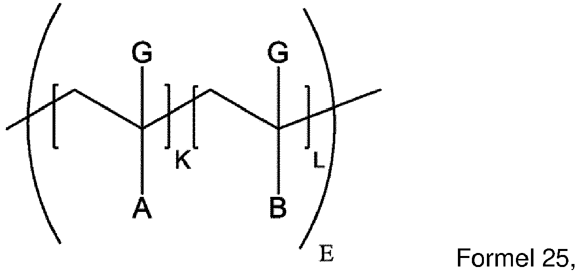
wobei E die durchschnittliche Gesamtzahl derartiger Wiederholungseinheiten in einem zufälligen oder blockartigen Polymerdispergiermittel ist, und Formel 25 **gekennzeichnet ist als** eine partikelverankernde Wiederholungseinheit oder ein Block, der die tertiäre Amin- oder quaternisierte tertiäre Amingruppe A chemisch daran angelagert hat, wobei die Formel 25 zu 10 bis 60 Gew.-% das Dispergiermittel bezogen auf das Gewicht des Dispergiermittels ist; und mindestens eine Wiederholungseinheit oder mindestens ein Polymerrückgratblock, der/die die Formel aufweist 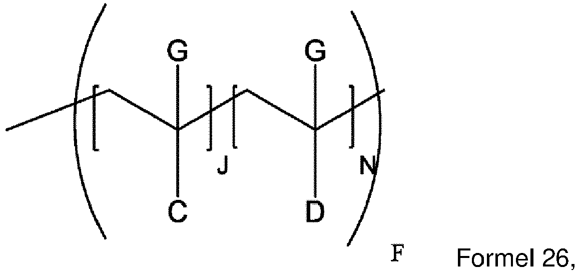
wobei F die Summe von durchschnittlichen Wiederholungseinheiten in zufälliger oder blockartiger Reihenfolge in dem Polymerdispergiermittel ist, wobei die Formel 26 **gekennzeichnet ist als** ein lösungsmittelsolublisierender Block des Dispergiermittels und zu 40 bis 90 Gew.-% das Dispergiermittel umfasst;
wobei die Formel 26 ein Polymersegment von 300 bis 5000 g/mol Molmasse ist oder D enthält, das ein Polymersegment von 300 bis 5000 g/mol Molmasse sein kann, **gekennzeichnet als** ein lösungsmittelsolublisierendes Polymersegment.

2. Polymerdispergiermittel nach Anspruch 1, wobei das Polymerdispergiermittel als ein Blockcopolymer beschrieben wird, wobei Formel 25 ein partikelverankernder Block ist, wobei es in Form von 1 oder 2 Blöcken in dem Dispergiermittel und Formel 26 ist, ein lösungsmittelsolublisierender Block ist, in Form von 1 oder 2 Blöcken vorhanden ist.

3. Polymerdispergiermittel nach einem der vorstehenden Ansprüche, wobei N null ist und der/die lösungsmittelsolublisierende(n) Block/Blöcke der Formel 26 aus dem Monomervorläufer zu der Wiederholungseinheit mit einer seitenständigen C-Gruppe gebildet werden, und J eine ganze Zahl ist, die groß genug ist, dass die solublisierende Kette eine zahlenmittlere Molmasse von 300 bis 5000 g/mol aufweist.

4. Polymerdispergiermittel nach einem der Ansprüche 1 oder 2, wobei N mindestens 1 und F mindestens eins ist.

5. Polymerdispergiermittel nach einem der Ansprüche 1, 2 oder 4, wobei D aus den Formeln 17 bis 24 ausgewählt ist 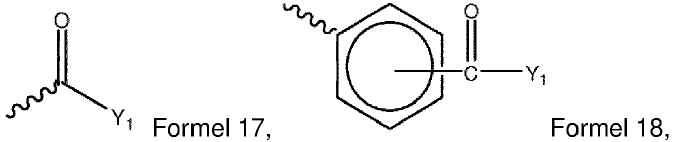 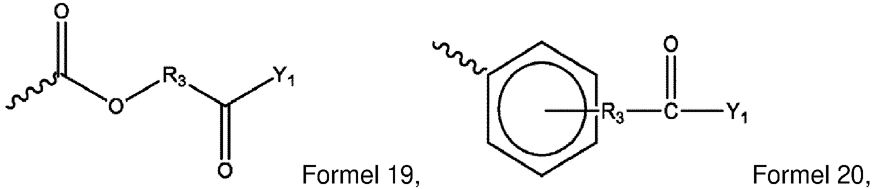 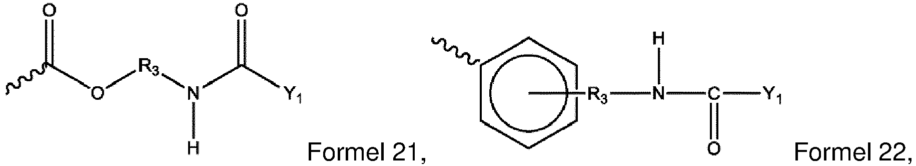 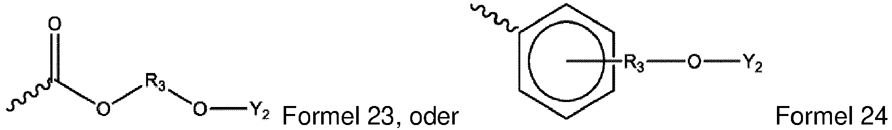
und Yiund Y₂ aus einem Polyetherhomopolymer oder -copolymer, einem Polyester aus einem Lacton und/oder Hydroxycarbonsäure, die 2 bis 26 Kohlenstoffatome enthält, einem Polyethercopolyester, einem Polyacrylat oder Mischungen davon ausgewählt sind;
wobei die variable 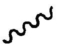 die Kohlenstoff-Kohlenstoff-Bindung zwischen dem olefinischen Rückgrat von Formel 1 und der Seitengruppe D angibt, wobei die 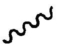 nicht als Teil der Formeln der Seitengruppe D betrachtet wird, sondern angibt, wo die Formeln mit dem Rückgrat von Formel 1 verbunden sind.

6. Polymerdispergiermittel nach einem der Ansprüche 1, 2, 4 oder 5, wobei D 300 bis 5000 g/mol zahlenmittlere Molmasse Poly(alkylenoxid) umfasst, und das Produkt von F mal N von 1 bis 50 ist.

7. Polymerdispergiermittel nach einem der Ansprüche 1, 2, 4, 5 oder 6, wobei D eine 500 bis 3000 g/mol zahlenmittlere Molmasse Poly(alkylenoxid) umfasst, F mal N von 3 bis 50 ist und das Poly(alkylenoxid) zu 50 bis 70 Gew.-% das Dispergiermittel umfasst.

8. Polymerdispergiermittel nach einem der Ansprüche 1, 2, 4, 5 oder 6, wobei D eine 300-5000 g/mol zahlenmittlere Molmasse von einer polyesterlösungsmittelsolublisierenden Kette umfasst, und das Produkt von F mal N 1 bis 50 ist, vorzugsweise wobei D eine 500 bis 3000 g/mol zahlenmittlere Molmasse Polyester umfasst, das von homo- oder copolymerisierenden Hydroxycarboxylsäuren oder Lactonen von der Hydroxycarbonsäure, die 2 bis 18 Kohlenstoffatome aufweist, abgeleitet ist, wobei das Produkt von F mal N von 3 bis 50 ist, und wobei zu 50 bis 70 Gew.-% das Dispergiermittel der Polyester ist.

9. Polymerdispergiermittel nach einem der Ansprüche 1, 2, 4, 5 oder 6, wobei D eine 300 bis 5000 g/mol zahlenmittlere Molmasse Polyolefin oder Polyacrylat umfasst, und wobei das Produkt von F mal N von I bis 50 ist, vorzugsweise wobei D eine 500 bis 3000 g/mol zahlenmittlere Molmasse Polyolefin oder Polyacrylat umfasst, und wobei das Produkt von F mal N von 3 bis 50 ist.

10. Polymerdispergiermittel nach einem der vorstehenden Ansprüche, wobei das Produkt von K mal E von 2 bis 25 ist.

11. Polymerdispergiermittel nach einem der vorstehenden Ansprüche, wobei A ist 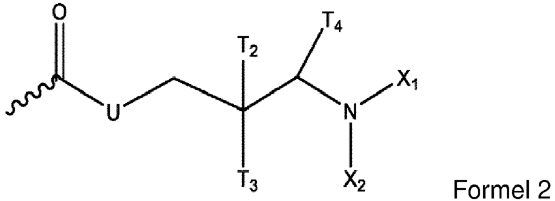
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 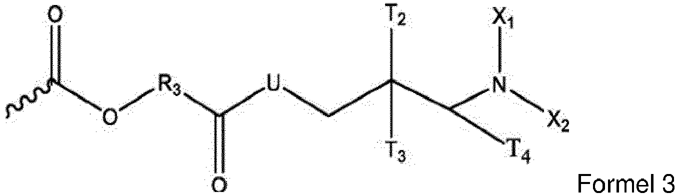
und U Sauerstoff oder Stickstoff umfasst, und U, wenn das U Stickstoff umfasst, ferner umfassend eine seitenständige H-, C₁₋₆-Alkyl- oder C₂₋₆-Acylgruppe, oder
wobei A ist 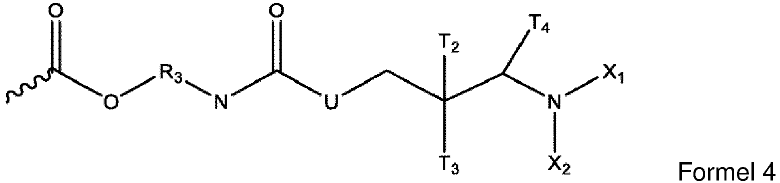
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 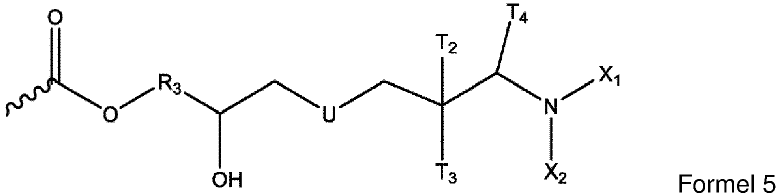
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 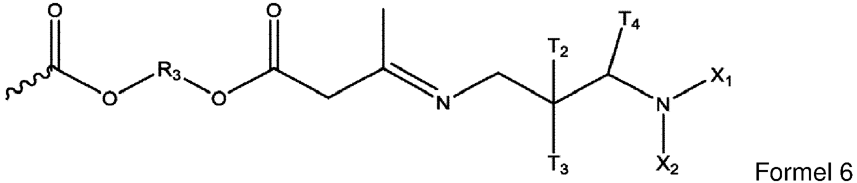
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 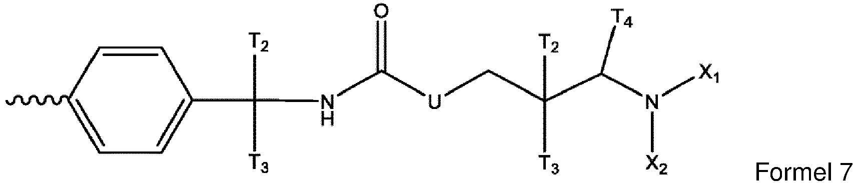
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 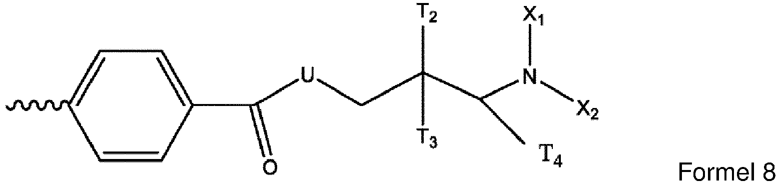
und U Sauerstoff oder Stickstoff umfasst, und U, wenn das U Stickstoff umfasst, ferner eine seitenständige H-, C₁₋₆-Alkyl- oder C₂₋₆-Acylgruppe umfasst, oder
wobei A ist 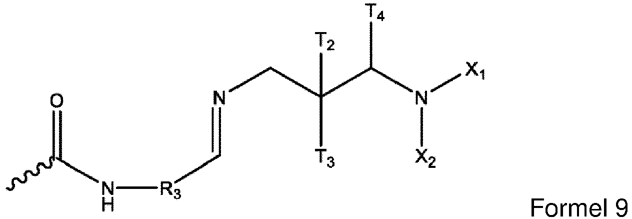
wobei R₃, T₂, T₃, T₄, X₁ und X₂ wie in Anspruch 1 definiert sind.

12. Zusammensetzung, umfassend einen Partikel in dispergierter Form, ein kontinuierliches Medium und ein Polymerdispergiermittel nach einem der Ansprüche 1 bis 11; wobei der Partikel vorzugsweise mit dem/den Verankerungsblock/Verankerungsblöcken von Formel 23 interagiert und das kontinuierliche Medium, umfassend Wasser, ein polares organisches Medium oder ein unpolares organisches Medium, vorzugsweise mit dem/den solublisierenden Block /solublisierenden Blöcken von Formel 24 interagiert.

13. Zusammensetzung nach Anspruch 12, wobei die Zusammensetzung ein Mahlgut, eine Farbe oder Tinte ist.

14. Zusammensetzung nach einem der Ansprüche 12 oder 13, wobei das Polymerdispergiermittel in einer Menge, die von 0,5 Gew.-% bis 30 Gew.-% oder 1 Gew.-% bis 25 Gew.-% der Zusammensetzung reicht, vorhanden ist.

## Revendications

1. Dispersant polymère comprenant un squelette oléfinique de formule 1 dérivé de la polymérisation de monomères oléfiniques alpha-bêta-insaturés et lesdits monomères ayant des groupes pendants sélectionnés parmi A, B, C et D ou étant fonctionnalisés après polymérisation pour avoir lesdits groupes pendants A, B, C et D ; ledit dispersant étant un copolymère aléatoire ou en bloc ayant des unités répétées ci-dessous en ordre aléatoire ou en bloc, 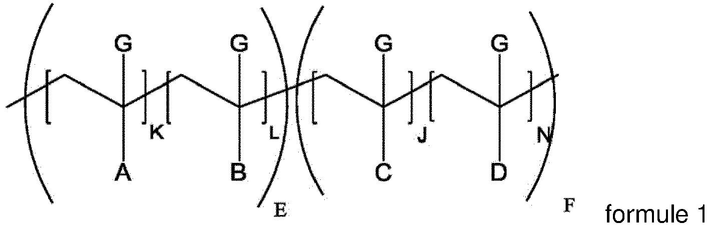
dans laquelle K, E et F sont au moins 1 ; L, J et N peuvent être individuellement nuls, mais J et N ne peuvent pas être tous deux nuls dans le même dispersant de formule 1 ;
dans laquelle lesdits K, L, J, N, E et F sont des nombres entiers non négatifs et les valeurs de K, L, J, N, E et F sont telles que le dispersant a une masse moléculaire moyenne en nombre allant de 2000 à 60 000 g/mole ; dans laquelle G est un groupe CH₃ ou H ; dans laquelle :
A est un fragment comprenant une amine aliphatique tertiaire ou quaternisée et un groupe de liaison comprenant un hydrocarbylène, dans laquelle hydrocarbylène se réfère à un groupe de type hydro-carbone divalent formé de préférence par l'élimination de deux hydrogènes d'un groupe hydro-carbone de 5 à 30 atomes de carbone et comprenant éventuellement jusqu'à 3, 4 ou 5 atomes d'oxygène, jusqu'à 1 ou 2 atomes de soufre et/ou jusqu'à 3, 4 ou 5 atomes d'azote dans des liaisons de type éther, ester, soufre et amide, et dans laquelle A est de préférence choisi parmi les structures de formules 2 à 9 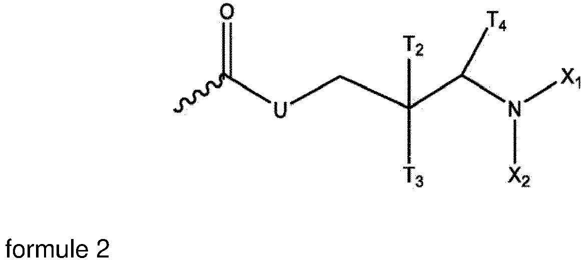 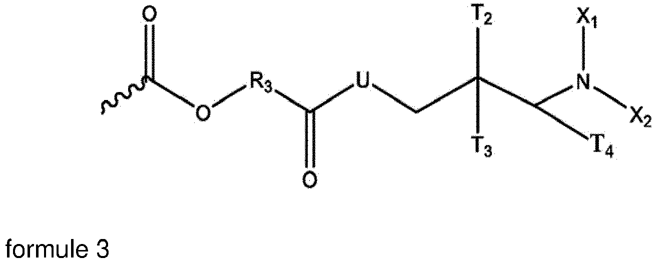 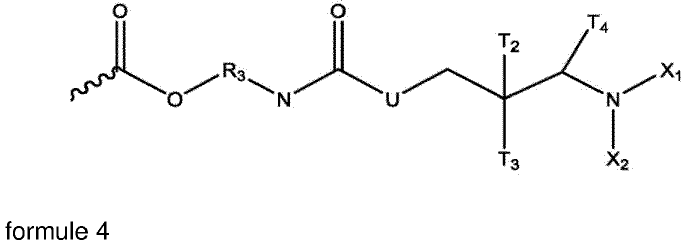 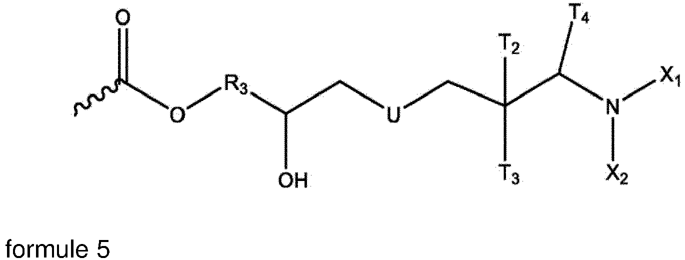 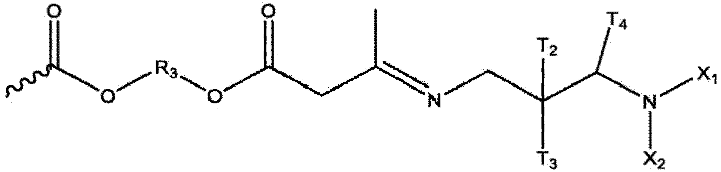 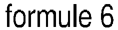 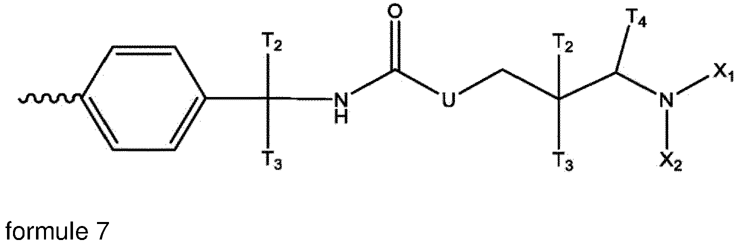 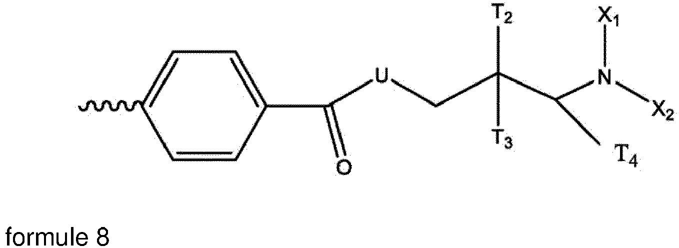 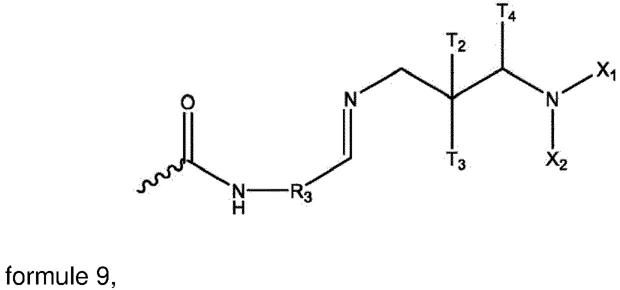 dans lesquelles
U comprend un azote, un oxygène ou un soufre fonctionnel, typiquement de l'oxygène ou de l'azote et U, lorsque ledit U comprend de l'azote, comprend en outre un groupe pendant H, alkyle en C₁₋₆, ou acyle en C₂₋₆,
R₃ est indépendamment un groupe alkylène ou hydrocarbylène qui peut être linéaire ou ramifié ayant un nombre de carbones de 1 à 25, dans lesquelles lorsque R₃ est un groupe hydrocarbylène, il peut contenir des atomes d'oxygène ou d'azote en une quantité allant jusqu'à un azote ou oxygène pour 3 atomes de carbone,
T₂ et T₃ sont chacun indépendamment un alkyle de préférence méthyle, éthyle ou propyle, hydroxyalkylène en C₁-C₃ de préférence -CH₂OH, aryle de préférence benzyle ou phényle, ou le groupe -CH(T₄)-N(X₁)(X₂),
T₄ est H, ou éventuellement aryle substitué de préférence benzyle, phényle ou cinnamyle où le substituant est alcoxy en C₁-C₄, hydroxyle, alkyle en C₁-C₄, éventuellement halogène, éventuellement alkyle en C₁-C₄ substitué par des hétéroatomes,
X₁ et X₂ sont chacun indépendamment des groupes alkyle, alkyle substitué, aralkyle ou alkaryle ; les groupes alkyle sont préférés, notamment les groupes méthyle ; ou X₁, X₂ et l'atome d'azote peuvent former ensemble une structure cyclique substituée ou non substituée de cinq ou six atomes, éventuellement ayant une aromaticité, de préférence où X₁, X₂, et l'atome d'azote forment la pyridine, la morpholine ou l'imidazole,
l'atome d'azote X₁-N-X₂ peut être partiellement ou complètement quaternisé ; et/ou partiellement ou totalement neutralisé ;
B est le reste du monomère acrylique ou des mélanges de monomères après incorporation des deux carbones et tout groupe G de la double liaison carbone-carbone du monomère de type acrylique dans le squelette, c'est-à-dire le COOH de l'acide acrylique, le COO-alkyle des acrylates d'alkyle,
C est un fragment dérivé d'un monomère acrylique ou de mélanges de monomère(s), de préférence d'acides (méth)acryliques, de sels d'acides (méth)acryliques, d'amides d'acides (méth)acryliques ; de (méth)acrylates d'alkyle ; d'acides, de sels et d'amides de diacides éthyléniquement insaturés, de préférence de l'acide itaconique ou de l'acide maléique,
dans laquelle B et C ont de préférence la formule 10, 11 ou 12 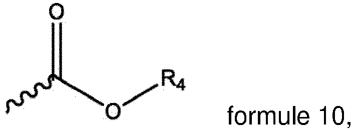 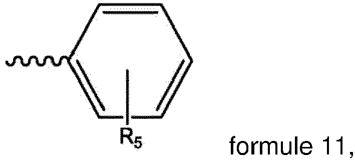 ou 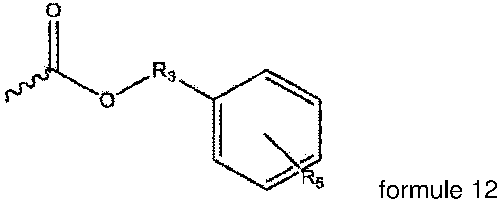
dans laquelle R₄ est un groupe alkyle linéaire ou ramifié ayant un nombre de carbone de 1 à 25, et R₅ est H, -CHs ou des groupes alkyle linéaires ou ramifiés ayant un nombre de carbones de 1 à 25 ; et
D comprend un segment polymère de 300 à 5000 g/mole de masse moléculaire **caractérisé en tant que** segment polymère de solubilisation de solvant dans laquelle ledit segment polymère est choisi parmi un polyacrylate, un polyester, un polyéther ou un copolymère de polyéther et de polyester, dans laquelle la variable 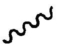 indique la liaison carbone-carbone entre le squelette oléfinique de formule 1 et les groupes pendants A, B ou C, la 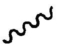 n'est pas considérée comme faisant partie des formules des groupes pendants A, B ou C, mais indique plutôt où les formules se lient au squelette de formule 1,
dans lequel ledit dispersant a au moins une unité de répétition de squelette ou au moins un bloc de squelette polymère ayant la formule 25 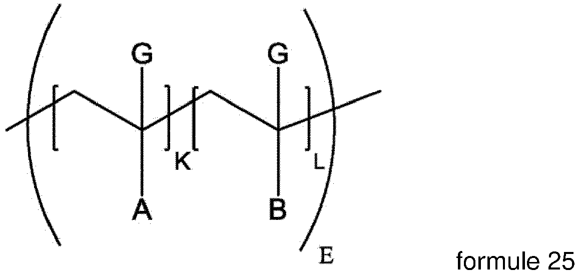
dans laquelle E est le nombre total moyen de telles unités de répétition dans un dispersant polymère aléatoire ou en bloc, et la formule 25 est **caractérisée comme** étant une unité ou un bloc de répétition d'ancrage particulaire auquel est fixé chimiquement ledit groupe A d'amine tertiaire ou d'amine tertiaire quaternisée, ladite formule 25 représentant de 10 à 60 % en poids dudit dispersant sur la base du poids dudit dispersant ; et au moins une unité de répétition ou au moins un bloc de squelette polymère ayant la formule 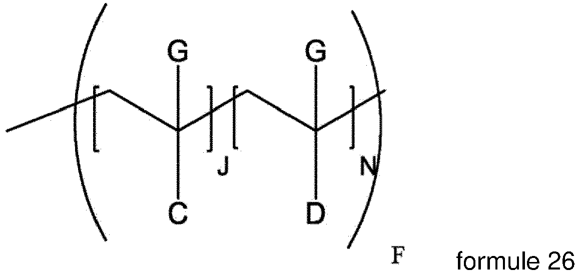
dans laquelle F est la somme des unités de répétition moyenne en ordre aléatoire ou en bloc dans ledit dispersant polymère, ladite formule 26 étant **caractérisée en tant que** bloc de solubilisation de solvant dudit dispersant et représentant de 40 à 90 % en poids dudit dispersant ;
ladite formule 26 étant un segment polymère de 300 à 5000 g/mole de masse moléculaire ou contenant D qui peut être un segment polymère de 300 à 5000 g/mole de masse moléculaire **caractérisée en tant que** segment polymère de solubilisation de solvant.

2. Dispersant polymère selon la revendication 1, dans lequel ledit dispersant polymère est décrit comme un copolymère à blocs, la formule 25 étant un bloc d'ancrage particulaire, se présentant sous la forme de 1 ou 2 blocs dans le dispersant et la formule 26, étant un bloc de solubilisation de solvant, se présentant sous la forme de 1 ou 2 blocs.

3. Dispersant polymère selon l'une quelconque des revendications précédentes, dans lequel N est nul et le ou les blocs de solubilisation de solvant de la formule 26 sont formés du précurseur de monomère à l'unité de répétition ayant un groupe pendant C et J est un nombre entier suffisamment grand pour que la chaîne de solubilisation ait une masse moléculaire moyenne en nombre allant de 300 à 5000 g/mole.

4. Dispersant polymère selon l'une quelconque des revendications 1 ou 2, dans lequel N est au moins 1 et F est au moins un.

5. Dispersant polymère selon l'une quelconque des revendications 1, 2 ou 4, dans lequel D est choisi parmi les formules 17 à 24 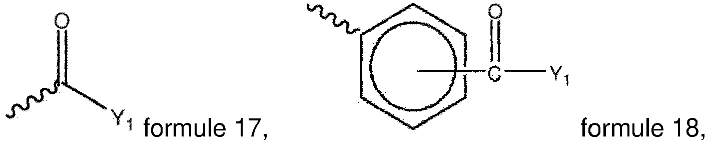 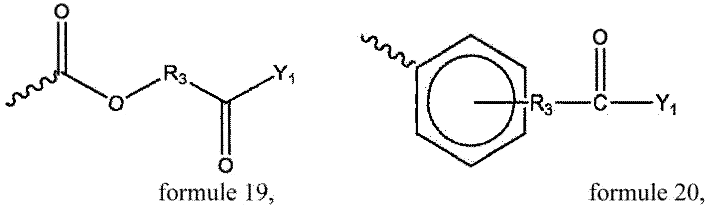 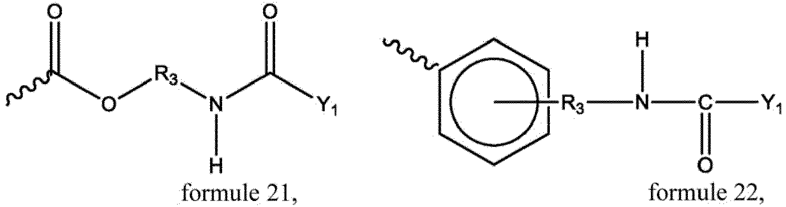 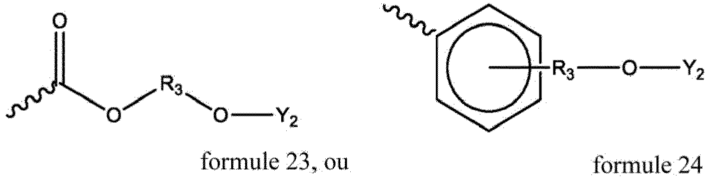
et Y₁ et Y₂ sont sélectionnés parmi un homopolymère ou un copolymère de polyéther, un polyester à partir d'une lactone et/ou d'un acide hydroxycarboxylique contenant de 2 à 26 atomes de carbone, un polyéther-co-polyester, un polyacrylate, ou leurs mélanges ;
dans lequel la variable 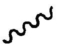 indique la liaison carbone-carbone entre le squelette oléfinique de formule 1 et le groupe pendant D, la 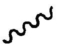 n'est pas considérée comme faisant partie des formules du groupe pendant D mais indique plutôt où les formules se lient au squelette de la formule 1.

6. Dispersant polymère selon l'une quelconque des revendications 1, 2, 4 ou 5, dans lequel D comprend du poly(oxyde d'alkylène) de masse moléculaire moyenne en nombre de 300 à 5000 g/mole et le produit de F fois N va de 1 à 50.

7. Dispersant polymère selon l'une quelconque des revendications 1, 2, 4, 5 ou 6, dans lequel D comprend un poly(oxyde d'alkylène) de masse moléculaire moyenne en nombre de 500 à 3000 g/mole, F fois N va de 3 à 50, et ledit poly(oxyde d'alkylène) comprend de 50 à 70 % en poids dudit dispersant.

8. Dispersant polymère selon l'une quelconque des revendications 1, 2, 4, 5 ou 6, dans lequel D comprend une chaîne de solubilisation de solvant polyester de masse moléculaire moyenne en nombre de 300 à 5000 g/mole et le produit de F fois N va de 1 à 50, de préférence dans lequel D comprend un polyester de masse moléculaire moyenne en nombre de 500 à 3000 g/mole dérivé d'acides hydroxycarboxyliques homo- ou co-polymérisés ou de lactones dudit acide hydroxycarboxylique ayant de 2 à 18 atomes de carbone, le produit de F fois N va de 3 à 50, et dans lequel 50 à 70 % en poids dudit dispersant est ledit polyester.

9. Dispersant polymère selon l'une quelconque des revendications 1, 2, 4, 5 ou 6, dans lequel D comprend une polyoléfine ou un polyacrylate de masse moléculaire moyenne en nombre de 300 à 5000 g/mole et dans lequel le produit de F fois N va de 1 à 50, de préférence dans lequel D comprend une polyoléfine ou un polyacrylate de masse moléculaire moyenne en nombre de 500 à 3000 g/mole et dans lequel le produit de F fois N va de 3 à 50.

10. Dispersant polymère selon l'une quelconque des revendications précédentes, dans lequel le produit de K fois E va de 2 à 25.

11. Dispersant polymère selon l'une quelconque des revendications précédentes, dans lequel A est 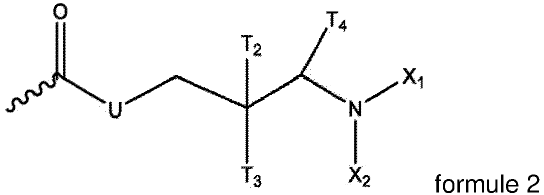
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 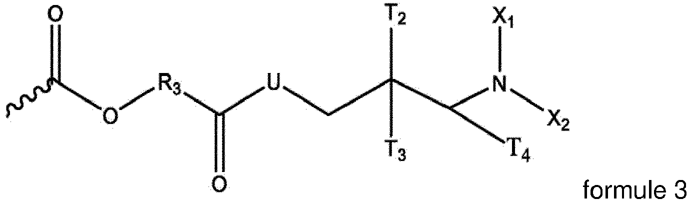
et U comprend de l'oxygène ou de l'azote et U, lorsque ledit U comprend de l'azote, comprenant en outre un groupe pendant H, alkyle en C₁₋₆, ou acyle en C₂₋₆, ou
dans lequel A est 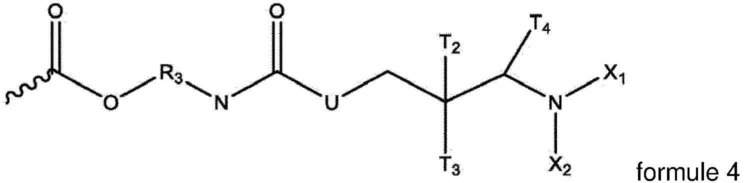
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 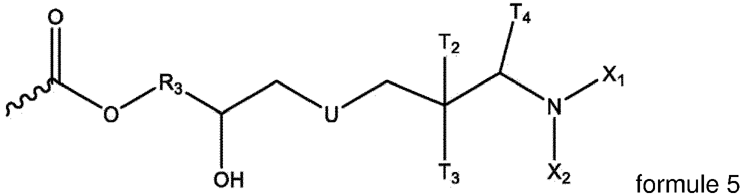
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 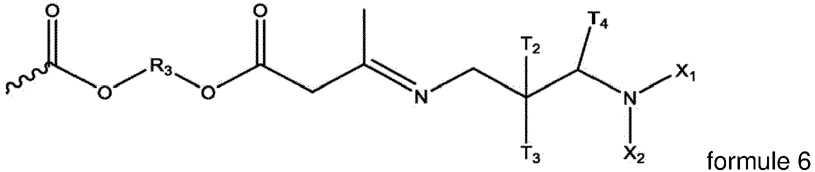
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 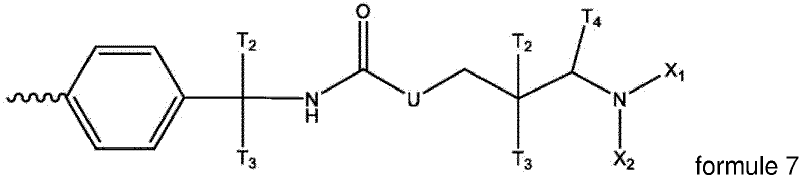
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 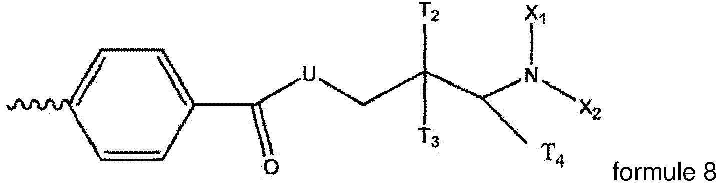
et U comprend de l'oxygène ou de l'azote et U, lorsque ledit U comprend de l'azote, comprend en outre un groupe pendant H, alkyle en C₁₋₆, ou acyle en C₂₋₆, ou
dans lequel A est 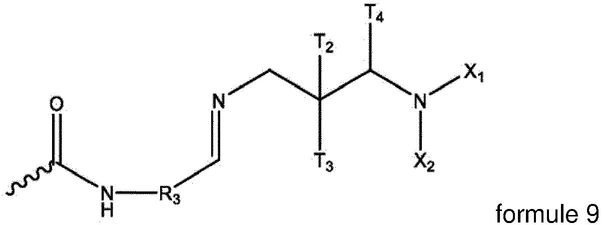
dans laquelle R₃, T₂, T₃, T₄, X₁ et X₂ sont tels que définis dans la revendication 1.

12. Composition comprenant une particule sous forme dispersée, un milieu continu et un dispersant polymère selon l'une quelconque des revendications 1 à 11 ; dans laquelle ladite particule interagit préférentiellement avec ledit ou lesdits blocs d'ancrage de formule 23, et ledit milieu continu comprenant de l'eau, un milieu organique polaire, ou un milieu organique non polaire interagit préférentiellement avec ledit ou lesdits blocs de solubilisation de formule 24.

13. Composition selon la revendication 12, dans laquelle la composition est une pâte-mère, une peinture ou une encre.

14. Composition selon la revendication 12 ou 13, dans laquelle le dispersant polymère est présent en une quantité allant de 0,5 % en poids à 30 % en poids, ou de 1 % en poids à 25 % en poids de la composition.
